# EUROPEAN PATENT APPLICATION

(11) **EP 4 644 184 A1**
(43) Date of publication of application: **05.11.2025**
(21) Application number: 23912104.9
(22) Date of filing: 26.12.2023
(51) Int. Cl.: B60R 1/24, B60K 8/00, B60K 15/063, B60R 1/25

(54) **WORK VEHICLE**

(30) Priority: 28.12.2022 JP 2022212146
(71) Applicant: KUBOTA CORPORATION, Osaka-shi, Osaka 556-8601 (JP)
(72) Inventor: SAKANO, Tomoyoshi, Sakai-shi, Osaka 590-0908 (JP); IWAMI, Kenichi, Sakai-shi, Osaka 590-0908 (JP); TAKAKI, Go, Sakai-shi, Osaka 590-0908 (JP); MINAMIDE, Yuki, Sakai-shi, Osaka 590-0908 (JP); AMITANI, Kodai, Sakai-shi, Osaka 590-0908 (JP); TAKAKI, Takahiro, Sakai-shi, Osaka 590-0908 (JP); OHNISHI, Teppei, Sakai-shi, Osaka 590-0908 (JP); HAYASHI, Yosuke, Sakai-shi, Osaka 590-0908 (JP); KAZAMA, Isamu, Sakai-shi, Osaka 590-0908 (JP); MORITA, Atsushi, Sakai-shi, Osaka 590-0908 (JP); MATSUI, Kenshiro, Sakai-shi, Osaka 590-0908 (JP)
(74) Representative: Cabinet Beau de Loménie
(86) International application number: PCT/JP2023/046556
(87) International publication number: WO 2024/143325

(57) **Abstract**

To secure worker's view even in a case where a tank is provided in a hood.

A working vehicle (1) of the present invention includes a vehicle body (2) to which a working device (49) is connectable; a traveling device (4) including a left front wheel (18L) provided at a left front portion of the vehicle body (2) and a right front wheel (18R) provided at a right front portion of the vehicle body (2); a drive device (5) to drive the traveling device (4); a tank (7) to store gas to drive the drive device (5); a hood (9) provided at a front portion of the vehicle body (2) such that the hood is located between the left front wheel (18L) and the right front wheel (18R); and an imager (50) provided on the vehicle body (2), and the tank (7) is housed in the hood (9), and the imager (50) is operable to capture an image of a region including the left front wheel (18L) and/or the right front wheel (18R).

## Description

### Technical Field

The present invention relates to a working vehicle that travels by using gas stored in a tank.

### Background Art

As described in Patent Literature 1, a tractor includes a hood on a front portion of a vehicle body. Inside the hood, an engine, a radiator, a fuel tank, a battery, and the like are stored.

On the other hand, for the purpose of realizing decarbonization, traveling vehicles that are driven by electric power supplied from a fuel cell, a power generation device, a battery, or the like that uses hydrogen as fuel have been developed. These working vehicles include a tank (hydrogen tank) in which hydrogen gas is stored (accumulated).

### Citation List

### Patent Literature

PTL 1: Japanese Unexamined Patent Application Publication No. 2022-128483

### Summary of Invention

### Technical Problem

Among members that constitute a drive device using a fuel cell, a tank is a member that has a relatively large volume and requires a large storage space. Accordingly, in a case where a tank is housed inside a hood instead of an engine of a conventional tractor, it is necessary to increase an external shape of the hood, which leads to a possibility that the hood blocks and reduces worker's view (downward view and forward view), especially a possibility that visibility of a ground contact portion of a front wheel becomes poor.

The present invention was accomplished in view of the above problem, and an object of the present invention is to provide a working vehicle that can secure worker's view even in a case where a tank is provided inside a hood.

### Solution to Problem

Technical means taken by the present invention to solve the above problem have the following features.

A working vehicle according to an aspect of the present invention includes a vehicle body to which a working device is connectable; a traveling device including a left front wheel provided at a left front portion of the vehicle body and a right front wheel provided at a right front portion of the vehicle body; a drive device to drive the traveling device; a tank to store gas to drive the drive device; a hood provided at a front portion of the vehicle body such that the hood is located between the left front wheel and the right front wheel; and an imager provided on the vehicle body, the tank is housed in the hood, and the imager is operable to capture an image of a region including the left front wheel and/or the right front wheel.

The imager may be operable to capture an image of a region including an area between the left front wheel and the hood.

The imager may be operable to capture an image of a region including an area between the right front wheel and the hood.

The hood may include a housing to house the tank. The housing may be wider than the vehicle body in the vehicle body width direction and overhang the left front wheel and/or the right front wheel.

The working vehicle may include a cabin to house an operator's seat provided on the vehicle body; and a display to display an image captured by the imager, the display being provided in the vicinity of the operator's seat.

The imager may be operable to capture an image of a region including the vehicle body.

The working vehicle may include a cabin to house an operator's seat provided on the vehicle body. The cabin may be provided rearward of the hood, one of or both of opposite end portions of the hood in a vehicle body width direction may line on a straight line that connects the operator's seat and the left front wheel and/or a straight line that connects the operator's seat and the right front wheel, and the imager may be operable to capture an image of a region located below the hood and including the left front wheel and/or the right front wheel.

The imager may image a ground contact portion of the left front wheel and/or the right front wheel from a position higher than axes of the left front wheel and the right front wheel.

The working vehicle may include a cabin to house an operator's seat provided on the vehicle body, the cabin may be provided rearward of the hood, a plurality of the tanks may be arranged in an up-down direction inside the hood, an upper end of the hood may be located higher than a backrest portion of the operator's seat, and the imager may include a first imager to capture an image of a region located below the hood and including the left front wheel and/or the right front wheel and a second imager to capture an image of a region including an area forward of the hood.

A plurality of the tanks may be arranged in a vehicle body width direction in the hood.

### Advantageous Effects of Invention

With the working vehicle according to the present invention, it is possible to secure worker's view even in a case where a tank is provided inside a hood.

### Brief Description of Drawings

[FIG. 1] FIG. 1 is a perspective view of a working vehicle according to a first embodiment.
[FIG. 2] FIG. 2 is a front view of the working vehicle according to the first embodiment.
[FIG. 3] FIG. 3 is a left side view of the working vehicle according to the first embodiment.
[FIG. 4] FIG. 4 is a plan view of the working vehicle according to the first embodiment.
[FIG. 5] FIG. 5 is a block diagram illustrating a configuration of an imager according to the first embodiment.
[FIG. 6] FIG. 6 is an exploded view of a tank unit according to the first embodiment.
[FIG. 7] FIG. 7 is a left side view illustrating an installation position and an irradiation angle of the imager in the working vehicle according to the first embodiment.
[FIG. 8] FIG. 8 is a plan view comparing a first region, a second region, and a third region whose images are to be captured by the imager.
[FIG. 9A] FIG. 9A illustrates a positional relationship among an operator's seat, front wheels, and a hood that makes it necessary to provide the imager.
[FIG. 9B] FIG. 9B illustrates a positional relationship among an operator's seat, front wheels, and a hood that makes it necessary to provide the imager.
[FIG. 9C] FIG. 9C illustrates a positional relationship among an operator's seat, front wheels, and a hood that makes it necessary to provide the imager.
[FIG. 10] FIG. 10 is a block diagram illustrating a configuration of the imager in the working vehicle according to the first embodiment.
[FIG. 11] FIG. 11 is a perspective view of a working vehicle according to a second embodiment.
[FIG. 12] FIG. 12 is a front view of the working vehicle according to the second embodiment.
[FIG. 13] FIG. 13 is a plan view of the working vehicle according to the second embodiment.
[FIG. 14] FIG. 14 illustrates a positional relationship among extension housings, a vehicle body, and tires in the working vehicle according to the second embodiment.
[FIG. 15A] FIG. 15A illustrates an example of a way in which tanks are stored in a housing and extension housings in the working vehicle according to the second embodiment.
[FIG. 15B] FIG. 15B illustrates an example of a way in which tanks are stored in a housing and extension housings in the working vehicle according to the second embodiment. Description of Embodiments

### [First Embodiment]

A first embodiment of a working vehicle 1 according to the present invention is described below.

The working vehicle 1 according to the first embodiment includes an imager 50 as a measure against "reduction of forward view and downward view" that can occur in a case where a tank 7 is housed in a hood 9. The working vehicle 1 according to the first embodiment can thus make up for the view blocked by the hood 9 (view toward a place located forward and a place located downward of the hood 8 when viewed from an operator's seat 10) by the imager 50 while allowing a plurality of tanks 7 to be stored in the hood 9.

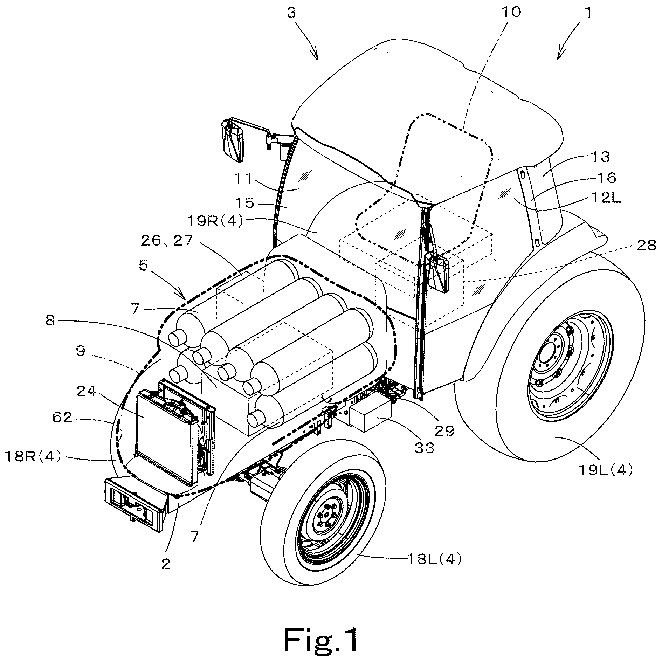

FIG. 1 is a side view illustrating the working vehicle 1 according to the first embodiment. FIG. 1 is a perspective view of a tractor (the working vehicle 1) according to the first embodiment. The working vehicle 1 according to the first embodiment is a vehicle in which the tank 7 that stores therein gas to drive a drive device 5 is provided in the hood 9. Examples of such a vehicle including the tank 7 include a fuel cell vehicle (FCV) in which hydrogen gas, which is fuel of electrode reaction, is stored in the tank 7. The working vehicle 1 according to the first embodiment is such a fuel cell vehicle.

Since gas (e.g., methane) other than hydrogen is sometimes used as fuel for a fuel cell vehicle, the working vehicle 1 according to the present invention also encompasses a fuel cell vehicle in which methane or the like is stored in the tank 7. Furthermore, the working vehicle 1 according to the present invention also encompasses a vehicle in which an internal-combustion engine (e.g., a diesel engine) is driven by using, as fuel, gas such as hydrogen, methane, or natural gas, petroleum gas, or biomass gas mainly containing methane stored in the tank 7.

In the first embodiment and a second embodiment, which will be described later, a tractor is taken as an example of the working vehicle 1. However, the working vehicle 1 according to the present invention is not limited to a tractor and may be, for example, an agricultural machine other than a tractor, a construction machine, a utility vehicle, or the like.

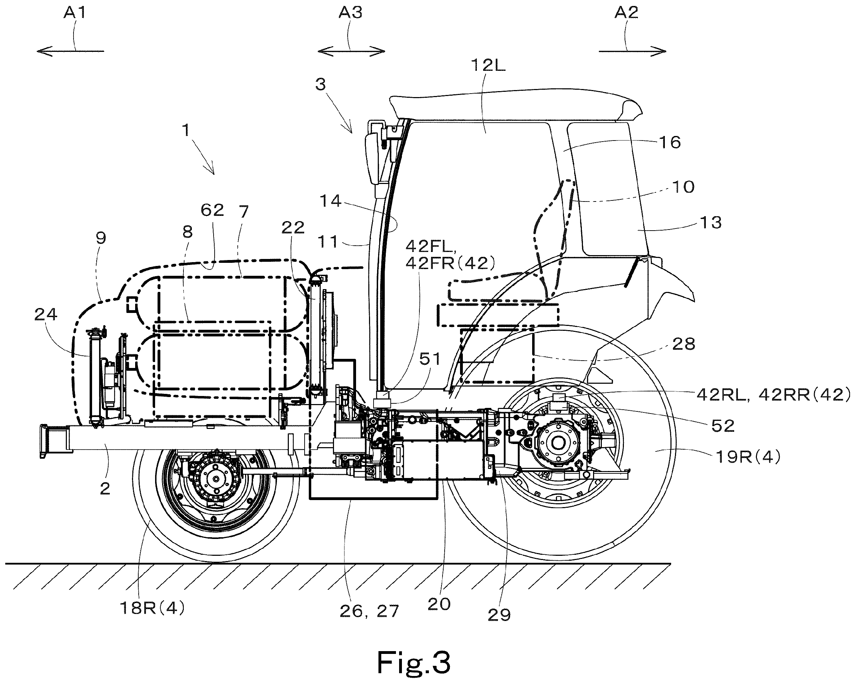

In the following description, a direction indicated by arrow A1 in FIG. 3 (a direction in which the working vehicle 1 travels forward) is referred to as a forward direction, a direction indicated by arrow A2 (a direction in which the working vehicle 1 travels rearward) is referred to as a rearward direction, and a direction indicated by arrow A3 is referred to as a front-rear direction. The directions indicated by A1 to A3 are also illustrated as appropriate in drawings other than FIG. 3.

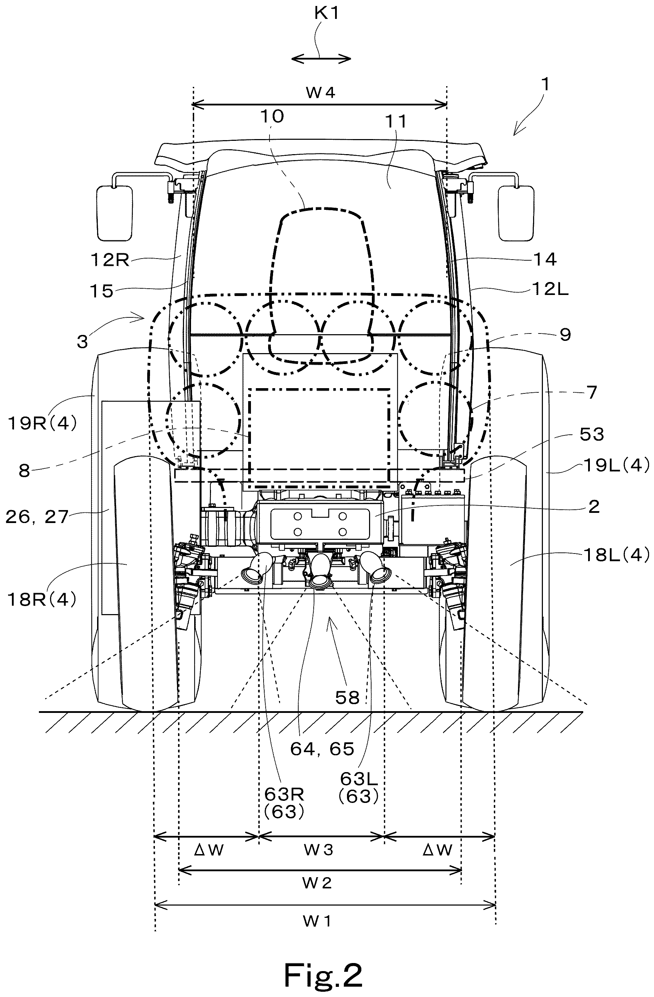

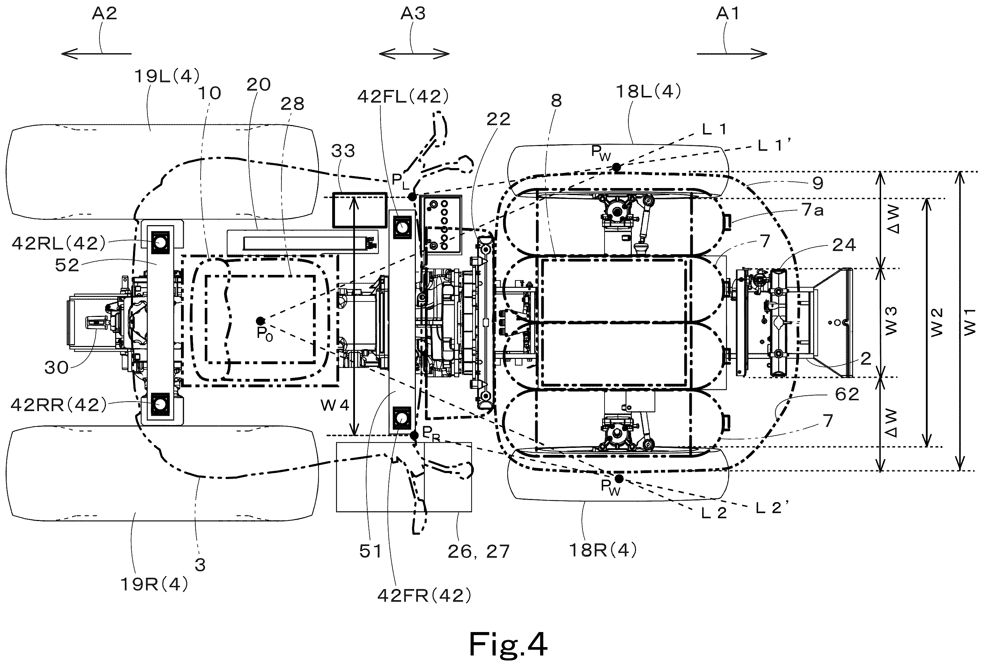

A horizontal direction (left-right direction) orthogonal to the front-rear direction A3 is referred to as a vehicle body width direction K1 or a width direction (see FIGS. 2 and 4). The vehicle body width direction K1 is a width direction of the working vehicle 1. A direction pointing rightward or leftward from a central portion in the width direction of the working vehicle 1 is referred to as a direction outward in the vehicle body width direction K1 (outward in the width direction). That is, the direction outward in the width direction is a direction pointing away in the vehicle body width direction K1 from a center in the width direction of the working vehicle 1. A direction opposite to the direction outward in the width direction is referred to as a direction inward in the vehicle body width direction K1 (inward in the width direction). That is, the direction inward in the width direction is a direction pointing toward the center in the width direction of the working vehicle 1 in the vehicle body width direction K1.

As illustrated in FIGS. 1 to 4, the working vehicle 1 according to the first embodiment includes a vehicle body 2 to which a working device 49 is connectable, a traveling device 4 that supports the vehicle body 2 and allows the vehicle body 2 to travel, the drive device 5 that drives the traveling device 4, and the tank 7 in which gas to drive the drive device 5 is stored. The traveling device 4 includes a left front wheel 18L provided at a left front portion of the vehicle body 2 and a right front wheel 18R provided at a right front portion of the vehicle body 2. The hood 9 is provided on a front portion of the vehicle body 2 (above the front portion) and is located between the left front wheel 18L and the right front wheel 18R. The cabin 3 is provided on a rear portion of the vehicle body 2 (above the rear portion), and the operator's seat 10 is housed in the cabin 3. Furthermore, the vehicle body 2 is provided with the imager 50 for securing forward view and visibility of ground contact portions of the front wheels.

First, the vehicle body 2, the traveling device 4 (the left front wheel 18L and the right front wheel 18R), the cabin 3, and the hood 9 provided in the working vehicle 1 according to the first embodiment are described below.

As illustrated in FIGS. 1 to 4, the traveling device 4 is provided at both ends of the vehicle body 2 in the vehicle body width direction. A transmission case 29 that transmits power from the drive device 5 to the traveling device 4 is provided on a rear portion of the vehicle body 2. A front portion of the vehicle body 2 is formed from a combination of metal frame members or the like to exhibit high rigidity. In other words, it can be said that the vehicle body 2 is a support frame provided with the transmission case 29 that is integral with the rear portion.

Specifically, the traveling device 4 is provided at both ends of the vehicle body 2 in the width direction (left-right direction). The drive device 5 is provided on an upper portion of the vehicle body 2. The cabin 3 is mounted above the rear portion of the vehicle body 2, and the hood 9 is provided above the front portion of the vehicle body 2. The drive device 5 according to the first embodiment is provided along the front-rear direction of the vehicle body 2. In other words, the drive device 5 according to the first embodiment is provided so as to straddle both of the cabin 3 and the hood 9. The vehicle body 2 according to the present embodiment supports all of the traveling device 4, the drive device 5, the cabin 3, and the like from below.

As illustrated in FIGS. 2 to 4, the cabin 3 is a box mounted above the rear portion of the vehicle body 2, and the operator's seat 10 is provided inside the cabin 3. The cabin 3 includes front, rear, left, and right panels and pillars provided between adjacent panels. Specifically, the panels included in the cabin 3 according to the present embodiment include a front panel 11 provided forward of the operator's seat 10, door panels 12L and 12R provided leftward and rightward of the operator's seat 10, respectively, and a rear panel 13 provided rearward of the operator's seat 10.

The pillars included in the cabin 3 include a left front pillar 14 provided between the front panel 11 and the left door panel 12L, a right front pillar 15 provided between the front panel 11 and the right door panel 12R, a left rear pillar 16 provided between the rear panel 13 and the left door panel 12L, and a right rear pillar provided between the rear panel 13 and the right door panel 12R.

The hood 9 is a cover mounted above the front portion of the vehicle body 2. The hood 9 is formed from a metal plate or the like so as to have a shape that is opened on a rear side and a lower side and is closed on a front side, a left side, a right side, and an upper side.

Note that the working vehicle 1 includes, inside the hood 9, a housing 62 in which the tank 7 (the tank 7 and the fuel cell stack 8) are stored. By providing such a housing 62 inside the hood 9, the drive device 5 and the tank 7 stored in the housing 62 are covered with the hood 9, and thus the drive device 5 and the tank 7 can be protected from wind during travel, rain, mud, and dust by the hood 9.

The traveling device 4 supports the vehicle body 2 and allows the vehicle body 2 to travel on a road surface (ground). In other words, the traveling device 4 gives propelling force to the vehicle body 2. In the first embodiment, the traveling device 4 is front tires 18L and 18R and rear tires 19L and 19R made of rubber or the like. In the traveling device 4 according to the present embodiment, power is transmitted from the drive device 5 to either the front tires 18L and 18R or the rear tires 19L and 19R or to both of the front tires 18L and 18R and the rear tires 19L and 19R. Note that a crawler or the like may be used as the traveling device 4 instead of the rubber tires.

The drive device 5 provided in the working vehicle 1 according to the present invention is a device that generates driving force for driving the traveling device 4, and generates driving force by using the gas accumulated in the tank 7. The drive device 5 according to the first embodiment generates electricity by a fuel cell system of causing hydrogen, which is fuel, to perform electrode reaction with oxygen, and generates driving force by driving a drive motor 6 by using the generated electricity. However, as described above, the drive device 5 according to the present invention may generate driving force by a method other than the fuel cell system. For example, the drive device 5 according to the present invention may generate driving force by driving an internal-combustion engine (e.g., diesel engine) while using, as fuel, gas such as methane stored in the tank 7.

The working vehicle 1 according to the first embodiment is a fuel cell vehicle (FCV), and the drive device 5 according to the first embodiment is a mechanism in which electricity is generated by a fuel cell by using hydrogen stored in the tank 7 as fuel and driving force is generated by driving the drive motor 6 by using the generated electricity.

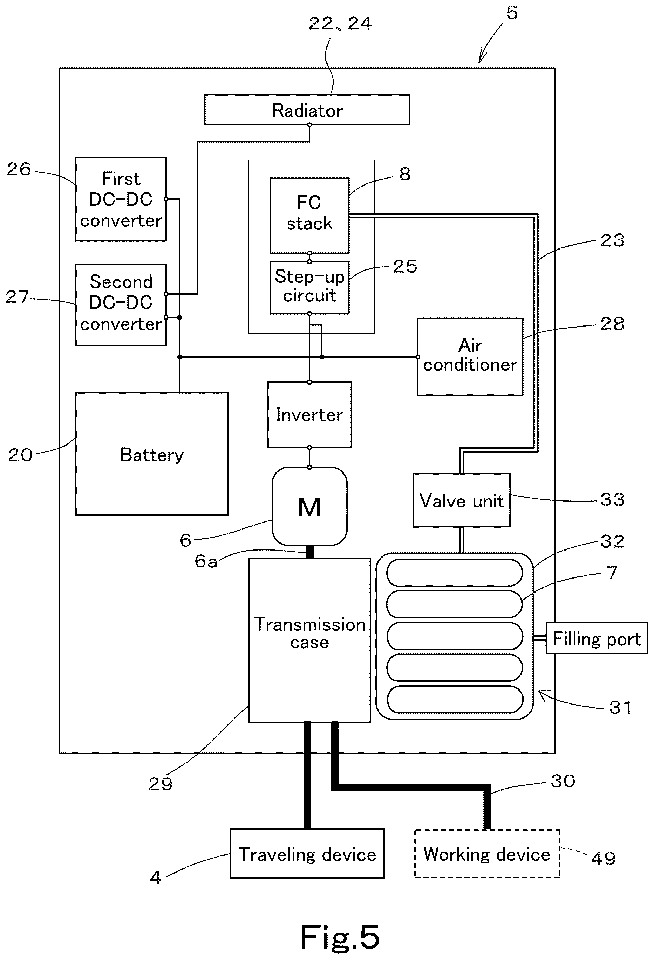

FIG. 5 is a block diagram of the drive device 5 provided in the working vehicle 1 according to the first embodiment. As illustrated in FIG. 5, the drive device 5 according to the first embodiment includes the fuel cell stack 8 that generates electricity by causing hydrogen, which is fuel, to perform electric reaction with oxygen and the drive motor 6 that is driven by using electric power (electricity) generated by the fuel cell stack 8. Furthermore, the drive device 5 according to the first embodiment includes a battery 20 that accumulates electric power supplied from the fuel cell stack 8.

Note that the drive device 5 according to the first embodiment uses a mechanism in which the driving force generated by the single drive motor 6 is sent to the transmission case 29, the driving force is divided into four by the transmission case 29, and the divided driving force is sent to the traveling device 4 (the left and right front tires 18L and 18R and the left and right rear tires 19L and 19R). However, the number of drive motors 6 included in the drive device 5 according to the present invention and the like may be changed as appropriate.

The drive motor 6, the fuel cell stack 8, the battery 20, and the tank 7 (hydrogen tank) that constitute the drive device 5 according to the first embodiment are described below.

As illustrated in FIGS. 1 to 4, the drive motor 6 is, for example, a permanent magnet embedded type DC synchronous motor, a winding field type synchronous motor, or the like. The drive motor 6 is a single drive motor 6 provided rearward of the fuel-cell stack 8. The drive motor 6 includes an output shaft 6a extending rearward and drives the output shaft 6a to rotate. The output shaft 6a is connected to the transmission case 29.

A transmission, a clutch, a differential gear, and the like that change speed stages of power transmitted to the output shaft 6a are provided in the transmission case 29. The transmission case 29 decelerates or accelerates power input from the output shaft 6a and outputs the decelerated or accelerated power to the front tires 18L and 18R and/or the rear tires 19L and 19R of the traveling device 4. For example, power output to the traveling device 4 is transmitted only to the rear tires 19L and 19R in a case where the working vehicle 1 is rear-wheel drive, and the power output to the traveling device 4 is transmitted to both of the front tires 18L and 18R and the rear tires 19L and 19R in a case where the working vehicle 1 is four-wheel drive.

**In** the working vehicle 1 according to the first embodiment, the transmission case 29 not only transmits the decelerated or accelerated power to the traveling device 4, but also transmits a part of the power to a working device. Specifically, a power take-off shaft (PTO shaft) 30 is provided in a rear portion of the working vehicle 1 (on a rear end of the transmission case 29), and power transmitted (input) to the transmission case 29 is output not only to the traveling device 4, but also to the PTO shaft 30. In this way, the working device (implement) can be actuated by using electric power generated by the fuel cell.

**In** the working vehicle 1 according to the first embodiment, not only the PTO shaft 30, but also a coupler (three-point linkage) are provided on the rear portion of the vehicle body 2 (the rear end of the transmission case 29). Such a three-point linkage allows various implements (working devices 49) to be attached rearward of the working vehicle 1 and change their postures or be driven, thereby allowing the working vehicle 1 to perform various kinds of work. The working device 49 is an implement such as a cultivator, a rotary, a mulcher, a hammer knife mower, a ridge coating machine, a conveying machine, a seeding machine, a harrow, or a ridge making machine.

Note that the PTO shaft 30 and the three-point linkage need not necessarily be provided. The PTO shaft 30 and the three-point linkage can be omitted in a case where the working vehicle 1 is an agricultural machine such as a combine or a rice planter, a construction machine, or the like. A hydraulic pump that is driven by power output by the drive motor 6, an electric motor different from the drive motor 6, or the like may be provided separately from the drive motor 6, and the working device (implement) may be actuated by a hydraulic pressure or electric power.

As illustrated in FIG. 5, a step-up circuit 25 that steps up electric power generated by the fuel-cell stack 8 is provided downstream of the drive motor 6 (downstream on an electric power transmission path). The step-up circuit 25 steps up the electric power generated by the fuel-cell stack 8, and thus a voltage for activating the drive motor 6 can be secured.

The step-up circuit 25 includes a circuit for stepping up the electric power generated by the fuel-cell stack 8, and the electric power thus stepped up is sent to the drive motor 6 and drives the drive motor 6. Note that some electric components used in the working vehicle 1 operate at a voltage lower than the drive motor 6. To such electric components that operate at a low voltage, electric power stepped down by a step-down circuit including a first DC-DC converter 26 and a second DC-DC converter 27 is supplied. In the present embodiment, examples of the electric components that operate at a low voltage include radiators (a first radiator 22 and/or a second radiator 24), the battery 20, and an air conditioner 28. Electric power stepped down by the first DC-DC converter 26 is supplied to the battery 20 and the air conditioner 28, and electric power stepped down by the second DC-DC converter 27 is supplied to the radiators.

The fuel cell stack 8 is a polymer electrolyte fuel cell (PEFC) that causes hydrogen, which is fuel, to perform electrode reaction with oxygen and generates electricity obtained as a result of the electrode reaction. The hydrogen supplied as fuel to the fuel cell is accumulated (stored) or occluded in the tank 7. In the fuel-cell stack 8, electrode layers are stacked. When the hydrogen gas is supplied to the fuel-cell stack 8, the electrode reaction is performed in the stacked electrode layers. The fuel-cell stack 8 has a structure for driving the drive motor 6 of the drive device 5 by using electricity taken out by the electrode reaction in the fuel cell. In the electrode reaction in the fuel-cell stack 8, carbon dioxide, which is always discharged, for example, in combustion reaction of an internal-combustion engine, is not discharged. Therefore, the working vehicle 1 according to the present invention, which is driven by using electric power generated by a fuel cell, is promising for realization of decarbonization.

Specifically, the fuel-cell stack 8 according to the first embodiment includes a plurality of stacked unit cells each including two kinds of electrodes, specifically, a positive electrode and a negative electrode inside a battery casing having a box shape. The positive electrode and the negative electrode are made of a positive-electrode material and a negative-electrode material, respectively, and has a sheet shape or a film shape. Each unit cell includes a single positive electrode and a single negative electrode, and adjacent unit cells are separated by a separator. The hydrogen gas in the tank 7 is supplied to the positive electrode, and oxygen gas (oxidation gas) compressed by a compressor or the like is supplied to the negative electrode, and battery reaction (electric power generation) is performed in each unit cell. The fuel-cell stack 8 generates electric power of a voltage and a current that can drive the drive device 5 by gathering electric power generated by the unit cells.

As illustrated in FIG. 5, a coolant for adjusting an electrode temperature is supplied to the fuel-cell stack 8, and thus a temperature of the electrodes provided in the fuel-cell stack 8 is adjustable to a temperature at which electric power generation efficiency is high (approximately 70°C in a case of a hydrogen fuel cell). The coolant circulates between an inside of the fuel-cell stack 8 and a radiator (the first radiator 22) provided on the front portion of the vehicle body 2, and a temperature inside the fuel-cell stack 8 is made adjustable by adjusting a flow rate of the coolant by using a pump, a valve, or the like (not illustrated).

As illustrated in FIGS. 3 to 5, in the first embodiment, the fuel-cell stack 8 is stored inside the hood 9 provided above the front portion of the vehicle body 2. The hydrogen gas is supplied from the tank 7 to the fuel-cell stack 8 through a gas pipe 23. The first radiator 22 for cooling the coolant for adjusting an electrode temperature is provided rearward of the fuel-cell stack 8 inside the hood 9.

Note that in the working vehicle 1 according to the first embodiment, a radiator is also provided forward of the fuel-cell stack 8 inside the hood 9. The radiator provided forward of the fuel-cell stack 8 is a radiator provided separately from the first radiator 22 provided rearward and is called the second radiator 24. In the present embodiment, the second radiator 24 is used not for adjusting an electrode temperature, but for temperature adjustment of a member other than the fuel-cell stack 8 that requires temperature adjustment (e.g., the air conditioner 28 for cooling an inside of the cabin 3).

The battery 20 accumulates electricity generated by the fuel-cell stack 8. In the first embodiment, electric power stepped down by the first DC-DC converter 26 is supplied to and accumulated in the battery 20. The battery 20 can be a lithium-ion battery, a nickel-hydrogen battery, a lead battery, a nickel-cadmium battery, or the like.

In the working vehicle 1 according to the first embodiment, the battery 20 is provided between the right front tire 18R and the right rear tire 19R (rightward of a central portion of the vehicle body 2 in the front-rear direction) together with the first DC-DC converter 26 and the second DC-DC converter 27. The air conditioner 28 is provided below the operator's seat 10 in the cabin 3. The positions where the battery 20 and the air conditioner 28 are provided are not limited to those in the example of the first embodiment.

As illustrated in FIG. 5, each of the plurality of tanks 7 is provided with the gas pipe 23, and the gas pipe 23 guides the hydrogen gas in the tank 7 to the valve unit 33. As the gas pipe 23, a hose made of a composite material combining materials such as a synthetic resin that can prevent transmission of hydrogen gas and a metal wire having flexibility, or the like is used.

The valve unit 33 collects the hydrogen gas sent from the tanks 7 through the gas pipes 23 and mixes the hydrogen gas as appropriate. The valve unit 33 includes a solenoid valve or the like that can adjust a pressure and a flow rate of the hydrogen gas, and sends the hydrogen gas to the fuel-cell stack 8 after adjusting the hydrogen gas to a pressure and a flow rate suitable for electric power generation in the fuel-cell stack 8.

The valve unit 33 is preferably provided in a position beside the plurality of tanks 7 and below the cabin 3. In a case where the valve unit 33 is provided beside the plurality of tanks 7, the tanks 7 and the valve unit 33 are almost equal in height, and the valve unit 33 can be provided close to the tanks 7 because of such a small difference in height in the up-down direction from the tanks 7. As a result, lengths of the gas pipes 23 can be made short.

Furthermore, in a case where the position of the valve unit 33 is set below the cabin 3, the gas pipes 23 can be provided by using a space formed between the cabin 3 and the vehicle body 2, and therefore the gas pipes 23 can be provided without physical interference with another member. Therefore, a degree of freedom of design of device layout is high.

Note that the drive motor 6 according to the first embodiment is provided at only one position on the upper portion of the vehicle body 2, and power generated by the single drive motor 6 is distributed to the front tires 18 and/or the rear tires 19L and 19R.

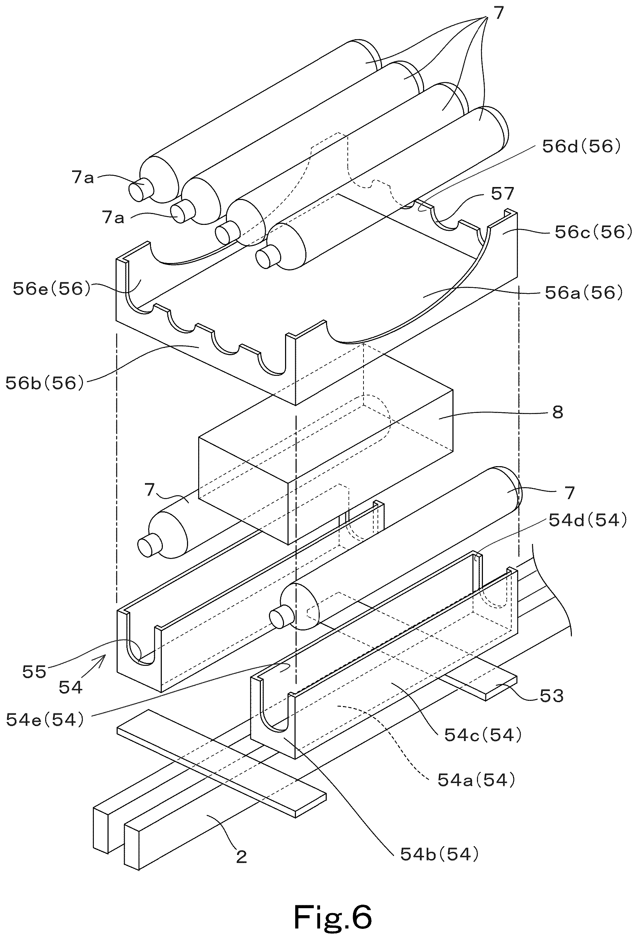

As illustrated in FIG. 6, a cylinder having a long cylindrical shape made of a hard synthetic resin or the like strengthened by carbon fibers or glass fibers is used as each of the hydrogen tanks 7. In the first embodiment, the tanks 7 (cylinders) are provided such that the axis of each tank 7 (cylinder) is directed in the front-rear direction. Four tanks 7 are arranged in the width direction, and the tanks 7 are stacked in two stages in the up-down direction. A total of six tanks 7 are stored in a tank casing 32.

Each tank 7 includes a neck 7a at a front end thereof. The gas pipe 23 is coupled to the neck 7a of the tank 7 with a safety valve (solenoid valve) (not illustrated) interposed therebetween.

The tank casing 32 includes left and right lower casings 54 in each of which a single tank 7 can be stored and an upper casing 56 in which four tanks 7 can be stored, and by storing the tanks 7 in the upper and lower casings 56 and 54, the tanks 7 can be protected from vibration and heat.

In the first embodiment, a lateral width W1 of the hood 9 in the vehicle body width direction is wider than an interval W2 along the width direction between the left front wheel 18L and the right front wheel 18R, as illustrated in FIGS. 2 and 4. Note that the interval W2 means a distance along a horizontal direction between an inner end portion (right end) of the left front wheel 18L in the width direction and an inner end portion (left end) of the right front wheel 18R in the width direction.

Furthermore, the lateral width W1 of the hood 9 is wider than a lateral width W3 of the vehicle body 2 in the vehicle body width direction. The hood 9 protrudes beyond the vehicle body 2 leftward and rightward by the same distance. It can therefore be said that the hood 9 protrudes leftward beyond a left end of the vehicle body 2 by a width ΔW and protrudes rightward beyond a right end of the vehicle body 2 by the width ΔW.

Furthermore, the housing 62 according to the first embodiment extends beyond the vehicle body 2 outward in the vehicle body width direction (wider than the vehicle body 2 in the vehicle body width direction) and protrudes upward beyond (overhangs) the left front wheel 18L and/or the right front wheel 18R. Accordingly, end portions of the hood 9 in the vehicle body width direction, in other words, end portions of the housing 62 in the vehicle body width direction overlap an upper portion of the left front wheel 18L and an upper portion of the right front wheel 18R (cross at different heights in the up-down direction).

As illustrated in the front view of FIG. 2, a width of the hood 9 in the left-right direction changes at a height almost equal to a height of upper ends of the front tires 18, and the hood 9 is divided into an upper portion and a lower portion at this height. That is, the upper portion of the hood 9 is located higher than the upper ends of the front tires 18, and the lower portion of the hood 9 is located downward of the upper ends of the front tires 18.

By providing the housing 62 having an increased width in the vehicle body width direction, a large number of tanks 7 can be stored inside the hood 9.

A height in the up-down direction of the upper portion of the hood 9 according to the first embodiment may have a dimension that allows two tanks 7 to be arranged along the up-down direction. That is, the lateral width in the left-right direction has a dimension that allows four tanks 7 to be arranged along the left-right direction. That is, the upper portion of the hood 9 can accommodate six tanks 7 in total. Note that the hood 9 provided in the working vehicle 1 according to the present invention may be one that allows three tanks 7 to be arranged in the width direction or may be one that allows five or more tanks 7 to be arranged in the width direction.

The lower portion of the hood 9 according to the first embodiment has a dimension that allows the vehicle body 2 and a lower half of the fuel cell stack 8 to be stored. That is, the fuel cell stack 8 is housed in the lower portion of the hood 9 so that an upper half of the fuel cell stack 8 protrudes upward, and the six tanks 7 are provided in the upper portion of the hood 9 so as to surround the upper half of the fuel cell stack 8 that protrudes upward.

A positional relationship between the hood 9 and the cabin 3 is described.

As described above, the cabin 3 is provided with the front panel 11 through which an operator can see forward. As illustrated in FIG. 4, the front panel 11 has a left end P_{L} and a right end P_{R}. A distance along the width direction from the left end P_{L} to the right end P_{R} is a lateral width W4 of the front panel 11. The lateral width W4 of the front panel 11 is almost identical to the interval W2 along the width direction between the left front wheel 18L and the right front wheel 18R. The lateral width W1 of the hood 9 is longer than the lateral width W4 of the front panel 11 and the interval W2 along the width direction between the left front wheel 18L and the right front wheel 18R.

Since the operator is sitting on the operator's seat 10, the operator is located at a center P₀ of the operator's seat 10. In a case where the operator sitting on the operator's seat 10 visually checks ground contact portions of the left front wheel 18L and the right front wheel 18R, lines L1 and L2 extending from the center P₀ of the operator's seat 10 to the ground contact portions (centers P_{W} of ground contact portions) of the left front wheel 18L and the right front wheel 18R indicate lines of sight of the operator. In the case of the working vehicle 1 according to the first embodiment, an external shape of the hood 9 (the line with alternate long and two short dashes indicating the external shape in FIG. 4) overlaps the lines L1 and L2, and therefore the lines of sight of the operator are blocked by the hood 9. That is, the operator sitting on the operator's seat 10 cannot see the ground contact portions of the left front wheel 18L and the right front wheel 18R.

Note that since the front panel 11 has the lateral width W4 from the left end P_{L} to the right end P_{R} as described above, lines of sight of the operator leaning to the left or right need to be considered. A line L1' extending from the left end P_{L} of the front panel 11 to the ground contact portion P_{W} of the left front wheel 18L overlaps the external shape of the hood 9, as with the line L1. That is, even in a case where the operator leans to the left or right, the operator cannot see or hardly sees the ground contact portions of the left front wheel 18L and the right front wheel 18R.

Furthermore, a height of a seat surface of the operator's seat 10 is higher than heights of the left front wheel 18L and the right front wheel 18R and is higher than a height of a lower end of the front panel 11. However, a height of the hood 9 is higher than the height of the seat surface of the operator's seat 10. In the example of FIG. 2, an approximately half of the area of the front panel 11 is hidden by the hood 9 when viewed from the front side. Therefore, it is sometimes hard to see forward or downward due to the hood 9 depending on a physical size of the operator or terrain on which the working vehicle 1 travels. Especially, forward view is restricted markedly.

As described above, the hood 9 has an external shape that restricts operator's view, but has a large volume as the housing 62.

That is, the housing 62 (the hood 9) has a length along the width direction from the left front wheel 18L to the right front wheel 18R, to be accurate, a length from the center P_{W} of the ground contact portion of the left front wheel 18L to the center P_{W} of the ground contact portion of the right front wheel 18R. The lateral width of the housing 62 in the illustrated example is longer than the lateral width W4 of the front panel 11 and the interval W2 along the width direction from the right end of the left front wheel 18L to the left end of the right front wheel 18R. Note that the lateral width of the housing 62 can be expanded to a dimension similar to an interval (a maximum width between the tires) along the width direction from a left end of the left front wheel 18L to a right end of the right front wheel 18R. That is, the housing 62 stores tanks 7 therein while using a space from the left front wheel 18L to the right front wheel 18R to the maximum extent. In a case where the housing 62 having a lateral width equal to or less than the interval along the width direction from the left end of the left front wheel 18L to the right end of the right front wheel 18R is provided, outer side surfaces of the left front wheel 18L and the right front wheel 18R in the width direction are located outward of a left end and a right end of the housing 62 in the width direction, and therefore direct contact of the housing 62 with the ground can be prevented or reduced when the left front wheel 18L and the right front wheel 18R are in contact with the ground. Therefore, even in a case where the tanks 7 filled with gas or the like are stored in the housing 62, breakage of the tanks 7 can be prevented or reduced.

The housing 62 has a length along the front-rear direction from a position slightly forward of the second radiator 24 to a position slightly forward of the first radiator 22. The length of the housing 62 along the front-rear direction is longer than lengths of the left front wheel 18L and the right front wheel 18R along the front-rear direction, and therefore has a size that can easily accommodate the tanks 7 having a length similar to the diameter of the front wheels 18.

The tanks 7 are provided inside the hood 9 as a tank unit 31 including the tanks 7. The tank unit 31 includes the tank casing 32 that can accommodate the plurality of tanks 7, and the plurality of tanks 7 are supported on the tank casing 32. In the first embodiment, the tank casing 32 is formed from a steel material or the like having a thickness that can thermally and physically protect the tanks 7 from an outside and has a box shape opened on an upper side. The six tanks 7 are stored so as to be stacked in upper and lower two stages in the tank casing 32.

As illustrated in FIG. 6, the tank casing 32 includes a tank support beam 53 that is provided so as to cross the vehicle body 2. The tank support beam 53 is a plate-shaped member that extends in the left-right direction and is provided in a front portion and a rear portion of the tank casing 32.

The tank casing 32 includes the lower casings 54 and the fuel cell stack 8 on the tank support beams 53. Specifically, the fuel cell stack 8 is provided at centers of upper portions of the tank support beams 53 in the left-right direction, and the lower casings 54 are provided leftward and rightward of the fuel cell stack 8.

As illustrated in FIG. 6, each of the lower casings 54 includes a bottom portion 54a having a rectangular plate shape that is longer in the front-rear direction than in the vehicle body width direction, a front wall portion 54b that stands along the up-down direction on a front edge of the bottom portion 54a, a left wall portion 54c that stands along the up-down direction on a left edge of the bottom portion 54a, a rear wall portion 54d that stands along the up-down direction on a rear edge of the bottom portion 54a, and a right wall portion 54e that stands along the up-down direction on a right edge of the bottom portion 54a. The bottom portion 54a of each of the lower casings 54 is fixed (rigidly fixed) to the upper surfaces of the tank support beams 53 by means such as fastening using a bolt or the like or welding.

An upper edge of the front wall portion 54b and an upper edge of the rear wall portion 54d of each of the lower casings 54 have a cutout portion 55 that is recessed downward in an arc shape. The front wall portion 54b and the rear wall portion 54d each have a single cutout portion 55. A single hydrogen tank 7 can be stored in the single cutout portion 55 so that the neck 7a is fitted in the recessed portion. By fitting the neck 7a into the recessed portion of the cutout portion 55, the tank 7 is housed in the lower casing 54 so that the tank 7 does not shake from side to side. That is, a single tank 7 is supported on the lower casing 54 located leftward of the fuel cell stack 8, and a single tank 7 is supported on the lower casing 54 located rightward of the fuel cell stack 8.

The tank casing 32 includes the upper casing 56 on upper portions of the lower casings 54 and the fuel cell stack 8.

As illustrated in FIG. 6, the upper casing 56 includes a bottom portion 56a having a rectangular plate shape that is longer in the front-rear direction than in the vehicle body width direction, a front wall portion 56b that stands along the up-down direction on a front edge of the bottom portion 56a, a left wall portion 56c that stands along the up-down direction on a left edge of the bottom portion 56a, a rear wall portion 56d that stands along the up-down direction on a rear edge of the bottom portion 56a, and a right wall portion 56e that stands along the up-down direction on a right edge of the bottom portion 56a. The bottom portion 56a of the upper casing 56 is fixed to the upper surfaces of the lower casings 54 by means such as fastening using a bolt or the like or fitting.

An upper edge of the front wall portion 56b and an upper edge of the rear wall portion 56d of the upper casing 56 have a cutout portion 57 that is recessed downward in an arc shape. The front wall portion 56b and the rear wall portion 56d each have four cutout portions 57, which correspond to the number of stored tanks 7. A single tank 7 is housed in the single cutout portion 57 so that the neck 7a is fitted in the recessed portion. By fitting the neck 7a into the recessed portion of the cutout portion 57, the tank 7 is housed in the tank casing 32 so that the tank 7 does not shake from side to side. That is, the upper casing 56 supports the four tanks 7 arranged in the left-right direction.

Note that the tank unit 31 is provided with gas pipes that guide hydrogen gas in the tanks 7 (not illustrated), a valve unit that, for example, mixes hydrogen gas introduced through the gas pipes 23, adjusts a flow rate of the hydrogen gas to a predetermined flow rate, and sends the hydrogen gas to the fuel-cell stack 8, and the like.

Although the tank casing 32 according to the first embodiment has a box shape, a shelf, a rack, or the like that can accommodate the tanks 7 may be used as the tank casing 32 according to the present invention.

**In** a case where the tanks 7 are provided in the hood 9, the external shape of the hood 9 increases, and view forward of the working vehicle 1 decreases. In particular, in a case where the working vehicle 1 is a working vehicle for agriculture, the ground contact portions of the front tires 18 are often checked during work. That is, in a case where work is performed by the working vehicle 1, it is necessary to check a region including the left front wheel 18L, a region including the right front wheel 18R, or a region including both of the left and right front wheels 18L and 18R.

**In** view of this, the working vehicle 1 according to the present invention includes the imager 50 to capture an image of the region including the left front wheel 18L, the region including the right front wheel 18R, or the region including both of the left and right front wheels 18L and 18R. The imager 50 makes it possible to capture an image of the region including the left front wheel 18L, the region including the right front wheel 18R, or the region including both of the left and right front wheels 18L and 18R and display an image thus taken for a worker. It is therefore possible to provide a plurality of tanks 7 inside the hood 9 (sufficiently expand the housing 62 outward in the width direction) without worrying about a decrease in view. As a result, a plurality of tanks 7 can be provided inside the hood 9, and the drive device 5 can be sufficiently driven by using plenty of fuel.

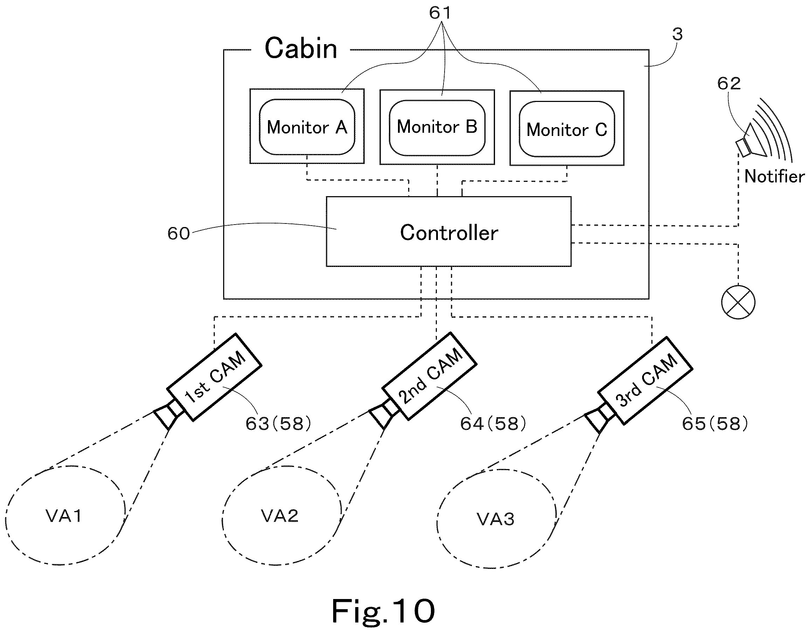

As illustrated in FIG. 10, the imager 50 includes an imaging unit (camera) 58 to capture an image of a region including the left front wheel 18L and/or the right front wheel 18R, a controller 60 that receives data taken by the imaging unit 58 and outputs a signal for display or for notification, a display 61 that displays an image on the basis of the signal for display output from the controller 60, and a notifier 62 that provides a notification on the basis of the signal for notification output from the controller 60.

The imaging unit 58 captures an image of the region including the left front wheel 18L and/or the right front wheel 18R. In other words, the imaging unit 58 captures an image of the region including the left front wheel 18L, captures an image of the region including the right front wheel 18R, or captures an image of the region including both of the left front wheel 18L and the right front wheel 18R.

In a case where the working vehicle 1 such as a tractor performs work such as cultivation while making a left turn, it is necessary to drive the working vehicle 1 so that the left front wheel 18L passes a region next to ground where work (cultivation) has been already performed. That is, during work that involves a left turn, the worker visually checks the region including the left front wheel 18L. In a case where the working vehicle 1 performs work while making a right turn, the worker visually checks the region including the right front wheel 18R as a matter of course. In a case where work involving both of a left turn and a right turn is performed, the worker visually checks the region including both of the left front wheel 18L and the right front wheel 18R.

Therefore, the imaging unit 58 can improve visibility during traveling of the working vehicle 1 by capturing an image of the region including the front wheel 18L and/or the right front wheel 18R.

In a case where an image of the region including the left front wheel 18L is captured by the imaging unit 58, an imaging angle of the imaging unit 58 is set so that an image of a region including an area between the left front wheel 18L and the hood 9 can be captured. In a case where an image of the region including the right front wheel 18R is captured by the imaging unit 58, the imaging angle of the imaging unit 58 is set so that an image of a region including an area between the right front wheel 18R and the hood 9 can be captured. For example, in a case where the imaging unit 58 is directed from the vehicle body 2 (a position close to a center in the width direction) toward the region including the region between the left front wheel 18L and the hood 9 or the region including the region between the right front wheel 18R and the hood 9, the ground contact portions of the left front wheel 18L and the right front wheel 18R (the ground contact portions of the front tires 18) can be included in imaging data with certainty, and imaging data that is optimum and advantageous for work performed on an agricultural field while steering the working vehicle 1 is obtained.

Note that the imager 50 (the imaging unit 58) may image a region including the vehicle body 2. That is, the imaging data obtained by the imager 50 (the imaging unit 58) need not be one obtained by capturing an image of only the ground. The imaging data may include an object other than the ground, for example, may include the front tire 18 or may include the vehicle body 2. By thus imaging the region including the vehicle body 2 by the imager 50 (the imaging unit 58), there is a possibility that imaging data such as a distance between the vehicle body 2 and the ground is obtained, and a wider variety of information can be obtained by the imager 50.

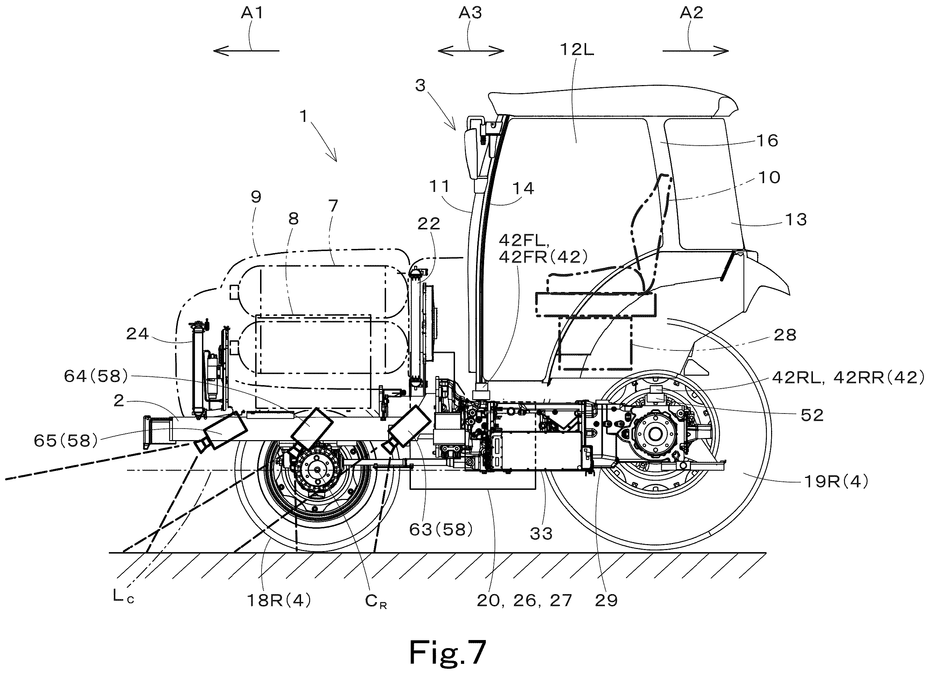

As illustrated in FIG. 7, the imager 50 is provided higher than an axis C_{R} of the left front wheel 18L and the right front wheel 18R. The imaging unit 58 of the imager 50 is provided higher than a segment L_{C} extending horizontally at a same height as the axis C_{R} of the left front wheel 18L and the right front wheel 18R in FIG. 7. In a case where an image of the ground contact portion of the left front wheel 18L and/or the right front wheel 18R located downward is captured by the imaging unit 58 provided higher than the segment L_{C}, obtained imaging data is one looking down at the ground contact portion, and much information (information such as the distance between the vehicle body 2 and the ground) can be obtained from the imaging data. Furthermore, in a case where the imaging unit 58 is provided higher than the axis C_{R} (the segment L_{C}) of the left front wheel 18L and the right front wheel 18R, the imaging unit 58 is sufficiently spaced apart from the ground, and therefore attachment of mud or the like scattered during traveling to a lens surface can be prevented or reduced, and the imaging unit 58 can be protected from becoming dirty.

Specific examples of a region selected as a region whose image is captured by the imaging unit 58 are as follows. Furthermore, the following imaging units 58 are desirably provided corresponding to the regions whose images are captured.

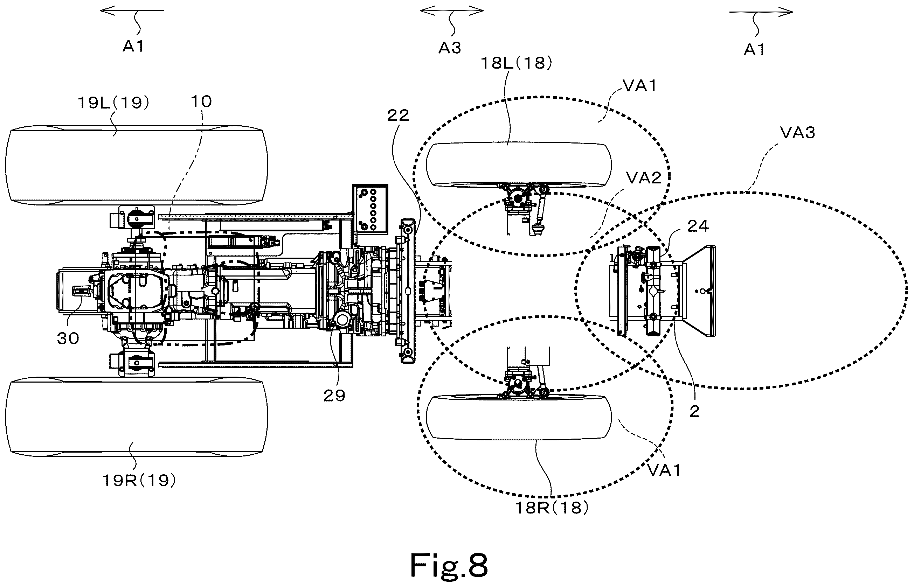

Next, a "first region VA1", a "second region VA2", and a "third region VA3" are exemplified as examples of a region whose image is captured by the imaging unit 58, as illustrated in FIG. 8, and a "first imaging unit 63", a "second imaging unit 64", and a "third imaging unit 65" are exemplified as specific examples of the imaging units 58 that image these regions.

As illustrated in FIG. 8, the first region VA1 is a region including the left front wheel 18L, a region including the right front wheel 18R, or a region combining these two regions.

The region including the left front wheel 18L is an elliptic region that is long in the front-rear direction and expands from a ground contact point (an almost central point of the ground contact portion of the left front wheel 18L) where the left front wheel 18L is in contact with the ground. A size (area) of the region including the left front wheel 18L is set so that the external shape of the left front wheel 18L is included within the region in both the front-rear direction and the width direction in a case where the left front wheel 18L with no steering angle (the left front wheel 18L directed to travel straight in the front-rear direction) is viewed from above. Note that the area of the region including the left front wheel 18L may be increased as long as the external shape of the left front wheel 18L is within the region, but a wider-angle lens needs to be used for the imaging unit 58 and aberration and distortion of imaging data to be obtained become larger as the area of the region whose image is to be captured becomes larger, and therefore it is preferable to set the area of the region in consideration of aberration and distortion permitted as imaging data.

The region including the right front wheel 18R is an elliptic region that is long in the front-rear direction as with the region including the left front wheel 18L and expands from a ground contact point (an almost central point of the ground contact portion of right front wheel 18R) where the right front wheel 18R is in contact with the ground. A size (area) of the region including the right front wheel 18R is set so that the external shape of the right front wheel 18R with no steering angle is included within the region in both the front-rear direction and the width direction in a case where the right front wheel 18R is viewed from above, as with the region including the left front wheel 18L.

The region combining the region including the left front wheel 18L and the region including the right front wheel 18R is a wide region that encompasses the "region including the left front wheel 18L" and the "region including the right front wheel 18R".

An image of the first region VA1 is captured by using the first imaging unit 63 (first camera). The first imaging unit 63 is provided higher than the segment L_{C} extending horizontally at the same height as the axis C_{R} of the left front wheel 18L and the right front wheel 18R. Specifically, as illustrated in FIG. 7, in the working vehicle 1 according to the first embodiment, the vehicle body 2 is located higher than the segment L_{C}, and the hood 9 is located higher than the vehicle body 2. The first imaging unit 63 is fixed to the vehicle body 2 (to be accurate, a metal frame that constitutes the vehicle body 2). That is, the first imaging unit 63 is attached at a position lower than the hood 9 and higher than the axis C_{R} of the left front wheel 18L and the right front wheel 18R so as to look down at (overlooks) the first region VA1.

Note that the first imaging unit 63 may be prepared on both left and right. That is, in a case where the first imaging unit 63 is prepared on both left and right, a left first imaging unit 63L to capture an image of the region including the left front wheel 18L included in the first region VA1 and a right first imaging unit 63R to capture an image of the region including the right front wheel 18R included in the first region VA1 are individually prepared. The left first imaging unit 63L is provided on a left side surface of the vehicle body 2 (the metal frame that constitutes the vehicle body 2), and the right first imaging unit 63R is provided on a right side surface of the vehicle body 2. In this way, an image the region including the left front wheel 18L can be captured by the left first imaging unit 63L, and an image of the region including the right front wheel 18R can be captured by the right first imaging unit 63R. As a result, image(s) of the first region VA1 can be captured by the left and right first imaging units 63L and 63R with certainty.

As the first imaging unit 63, an imaging unit having a wide field of view that can image the region including the left front wheel 18L and the region including the right front wheel 18R at once may be prepared. A single wide-angle first imaging unit 63 having an imaging region wide in the left-right direction encompassing the region including the left front wheel 18L and the region including the right front wheel 18R is prepared. The first imaging unit 63 is provided, for example, on a lower surface of the vehicle body 2, and an image of the region including the left front wheel 18L and the region including the right front wheel 18R is captured at once. Even in this way, the first region VA1 can be imaged by the first imaging unit 63 with certainty.

**In** a case where the wide-angle first imaging unit 63 is used, aberration and distortion permitted as imaging data need to be considered, for a similar reason to that described in relation to the size (area) of the imaging region.

By thus capturing an image of the first region VA1 by the first imaging unit 63, an image of the ground contact portions where the left front wheel 18L and the right front wheel 18R are in contact with the ground can be captured, and the working vehicle 1 can be operated by using imaging data thus obtained. As a result, even in a case where expanding the hood 9 (the housing 62) outward in the width direction causes poor visibility, driving of the working vehicle 1 is not hindered, and therefore a space that can sufficiently accommodate the tanks 7 can be secured in the hood 9 (the housing 62).

The ground contact portions of the left front wheel 18L and the right front wheel 18R need to be checked by providing the first imaging unit 63, in other words, the first imaging unit 63 needs to be provided in a case where the following relationship is established among the hood 9, the operator's seat 10, and the left front wheel 18L or the right front wheel 18R.

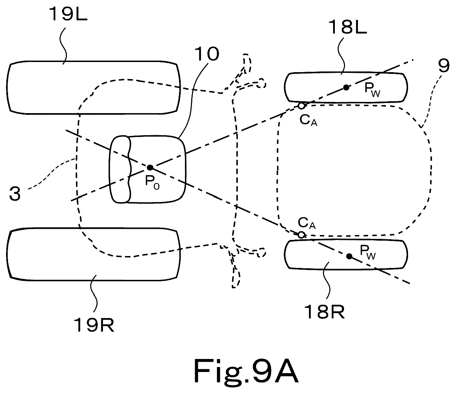

As illustrated in FIG. 9A, the center of the seat surface of the operator's seat 10 is denoted by "P₀", and the centers of the portions where the left front wheel 18L and the right front wheel 18R are in contact with the ground are denoted by "P_{W}". In plan view of the working vehicle 1 viewed from above, the line L1 connecting "P₀" of the operator's seat 10 and "P_{W}" of the left front wheel 18L is created. In the same plan view, the line L2 connecting "P₀" of the operator's seat 10 and "P_{W}" of the right front wheel 18R is created. For example, both of a point present in an outer left end portion of the hood 9 in the vehicle body width direction and a point present in an outer right end portion of the hood 9 in the vehicle body width direction are denoted by "C_{A}".

As illustrated in FIG. 9A, in a case where the outer end portion "C_{A}" of the hood 9 in the vehicle body width direction is present on the line L1 connecting "P₀" and "P_{W}", in other words, in a case where "C_{A}" lines on the line L1 even in a case where the position is changed in the front-rear direction, there is a possibility that an outer edge of the hood 9 in the vehicle body width direction hinders vision from the operator's seat 10 to the left front wheel 18L and the right front wheel 18R, and therefore it is preferable to capture an image of the ground contact portions of the left front wheel 18L and the right front wheel 18R by providing the first imaging unit 63.

The positional relationship between the outer end portion of the hood 9 in the vehicle body width direction and the line L1 in FIG. 9A is also established in a case where the hood 9 is wide outward in the vehicle body width direction.

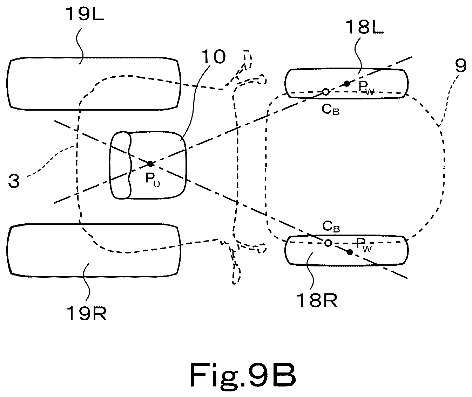

Assume a case where the hood 9 protrudes outward in the vehicle body width direction and an outer edge of the hood 9 in the vehicle body width direction slightly overlaps the left front wheel 18L or the right front wheel 18R, as illustrated in FIG. 9B. Even in this case, in a case where an outer end portion "C_{B}" of the hood 9 in the vehicle body width direction lines on the line L1 connecting "P₀" and "P_{W}", there is a possibility that the outer edge of the hood 9 in the vehicle body width direction hinders vision from the operator's seat 10 to the left front wheel 18L or the right front wheel 18R.

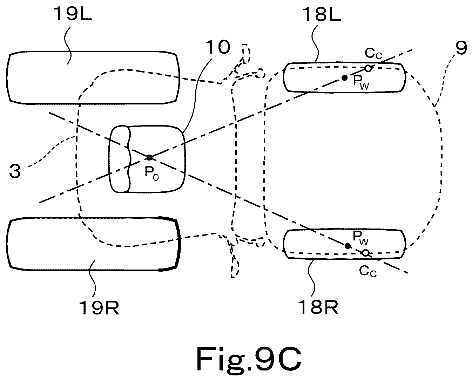

Furthermore, assume that the hood 9 protrudes outward in the vehicle body width direction more than FIG. 9B and an outer edge of the hood 9 in the vehicle body width direction almost completely overlaps the left front wheel 18L or the right front wheel 18R, as illustrated in FIG. 9C. Even in this case, in a case where an outer end portion "Cc" of the hood 9 in the vehicle body width direction lies on the line L1, vision from the operator's seat 10 to the front wheel 18 is hindered.

Therefore, in the cases illustrated in FIGS. 9A to 9C, it is preferable to capture an image of the ground contact portions of the left front wheel 18L and the right front wheel 18R by providing the first imaging unit 63.

Note that FIGS. 9A to 9C described above illustrate a relationship (planar relationship) in plan view of the working vehicle 1 viewed from above. Meanwhile, as for a positional relationship in the up-down direction, for example, an upper end of the hood 9 may be located higher than a backrest portion of the operator's seat 10. In such a case where the upper end of the hood 9 is located higher than the backrest portion of the operator's seat 10, it is difficult to check the ground contact portions of the front wheels 18 located downward due to the upper end of the hood 9. It is therefore preferable to capture an image of the ground contact portions by providing the first imaging unit 63 in a case where the upper end of the hood 9 is located higher than the backrest portion of the operator's seat 10.

The second region VA2 is set for an imaging purpose different from the first region VA1. That is, the first region VA1 is set to prevent or reduce worsening of view by capturing an image of the ground contact portions where the left front wheel 18L and the right front wheel 18R are in contact with the ground, and has a purpose of eventually enabling improvement of a storage capacity of the hood 9 (a capacity of storing the tanks 7). On the other hand, the second region VA2 is provided for a purpose of checking a state of the ground below the vehicle body 2. That is, by capturing an image of a space between the vehicle body 2 and the ground, whether or not irregular ground or an obstacle makes contact with the vehicle body 2, whether or not an obstacle makes contact with the first imaging unit 63, the second imaging unit 64, and the third imaging unit 65 provided at an almost same height, or the like is monitored. By setting such a second region VA2 in addition to the first region VA1, not only the ground contact portions of the front wheels 18 can be checked, but also damage of the vehicle body 2 and the imaging unit 58 can be monitored, and therefore the imager 50 can stably exhibit performance.

As illustrated in FIG. 8, the second region VA2 is a region between the left front wheel 18L and the right front wheel 18R, and a center of the second region VA2 is set at the ground below an intermediate portion of the hood 9 in the front-rear direction. The second region VA2 is an elliptic region that is long in the front-rear direction, as with the region including the left front wheel and the region including the right front wheel that are included in the first region VA1. The second region VA2 expands in an elliptic shape from the ground (the central point) below the intermediate point of the hood 9 in the front-rear direction. A size (area) of the second region VA2 is set to a size (area) similar to the region including the left front wheel 18L and the region including the right front wheel 18R that are included in the first region VA1. That is, the size (area) of the second region VA2 is set in a range surrounded by four points, specifically, a point located between the left front wheel 18L and the hood 9, a point located slightly forward of the first radiator 22, a point located between the right front wheel 18R and the hood 9, and a point located slightly rearward of the second radiator 24.

An image of the second region VA2 is captured by using the second imaging unit 64 (second camera). The second imaging unit 64 is provided higher than the segment L_{C}, as with the first imaging unit 63. Specifically, as illustrated in FIG. 7, the second imaging unit 64 is attached to the vehicle body 2 at a position located lower than the hood 9 and higher than the axis C_{R} of the left front wheel 18L and the right front wheel 18R, and is provided so as to look down at (overlook) the second region VA2 formed on the ground.

An attachment position of the second imaging unit 64 along the front-rear direction is set at a position offset rearward or forward from the intermediate point of the hood 9 in the front-rear direction. In a case where the attachment position of the second imaging unit 64 is set directly above the second region VA2, the second imaging unit 64 is directed directly downward, and therefore the space between the vehicle body 2 and the ground cannot be checked. Therefore, the second imaging unit 64 is set at a position offset rearward or forward of the intermediate point of the hood 9 in the front-rear direction so that the second region VA2 can be not only looked down at, but also checked sideways.

By thus capturing an image of the second region VA2 by the second imaging unit 64, an image of the space between the vehicle body 2 and the ground can be captured. As a result, whether or not irregular ground or an obstacle makes contact with the vehicle body 2, whether or not an obstacle makes contact with the first imaging unit 63, the second imaging unit 64, and the third imaging unit 65 provided at an almost same height, or the like can be monitored.

Note that an image of the region including the first region VA1 and the second region VA2, in other words, a region that is long in the left-right direction including a region from the left front wheel 18L to the right front wheel 18R can be captured by a single wide-angle imaging unit 58. In a case where such a wide-angle imaging unit 58 is used, whether or not such an imaging unit 58 is used is decided in consideration of aberration and distortion of permitted as imaging data, as in the above case.

The third region VA3 is set for an imaging purpose different from the first region VA1 and the second region VA2. That is, the first region VA1 is set for a purpose of imaging the ground contact portions of the left front wheel 18L and the right front wheel 18R, and the second region VA2 is provided for a purpose of checking the space between the vehicle body 2 and the ground. On the other hand, the third region VA3 is set for a purpose of imaging the ground forward of the working vehicle 1, in other words, the ground to which the working vehicle 1 will travel.

As illustrated in FIG. 8, the third region VA3 according to the first embodiment is set forward of the vehicle body 2, that is, on the ground that is located in an intermediate portion of the working vehicle 1 in the left-right direction and is located forward by approximately 1/3 to 1/2 of an entire length of the working vehicle 1 in the front-rear direction. The third region VA3 according to the present embodiment is an elliptic region that is long in the front-rear direction, as with the first region VA1 and the second region VA2. A size (area) of the third region VA3 is set to a size (area) similar to those of the first region VA1 and the second region VA2. Note that the set position and size (area) of the third region VA3 are not limited to those described above.

For example, the third region VA3 may be set forward of the left front wheel 18L and the right front wheel 18R, and the ground present ahead on a traveling path of the wheels may be checked. Alternatively, the third region VA3 may be set so as to include the ground that is located forward by a distance two or three times as large as the entire length of the working vehicle 1, and forward view in a region farther than that in the above case may be checked.

An image of the third region VA3 is captured by using the third imaging unit 65 (third camera). The third imaging unit 65 is provided higher than the segment L_{C}, as with the first imaging unit 63 and the second imaging unit 64. Specifically, as illustrated in FIG. 7, the third imaging unit 65 is attached to the vehicle body 2 at a position located lower than the hood 9 and higher than the axis C_{R} of the left front wheel 18L and the right front wheel 18R so as to look down at (overlook) the second region VA2 formed on the ground.

An attachment position of the third imaging unit 65 along the front-rear direction is set in a front portion of the hood 9, for example, below the second radiator 24. In a case where the third imaging unit 65 is provided at the above position, the third region VA3 can be overlooked, and an image of the ground to which the working vehicle 1 will travel can be captured. As a result, it is possible to recognize that the working vehicle 1 is about to reach a terminal end of a ridge and notify an operator of necessity of turn or recognize that a foreign object or the like is present on the traveling path and notify an operator of necessity of stopping the vehicle.

As illustrated in FIG. 10, the controller 60 converts imaging data obtained by the imaging unit 58 into a signal that can be displayed on the display 61 or output a signal that can be given as a notification by the notifier 62 by processing the imaging data. Specifically, the controller 60 is a mobile terminal, a computer, or the like, and is suitably provided in the operator's seat 10 that can be air-conditioned. The controller 60 and the imaging unit 58 (the first imaging unit 63, the second imaging unit 64, and the third imaging unit 65) can perform data communication by means such as wired communication or wireless communication (e.g., Wi-Fi (Registered Trademark) or Bluetooth (Registered Trademark)), and the imaging data is input from the imaging unit 58 to the controller 60.

The controller 60 converts the imaging data into a moving image signal or the like by processing the imaging data and outputs the signal to the display 61. Furthermore, the controller 60 outputs a signal for notification to the notifier 62 by processing the imaging data in a case where it is determined that notification using the notifier 62 is needed. Examples of the case where "it is determined that notification using the notifier 62 is needed" include a case where it has been confirmed from the imaging data obtained by the first imaging unit 63 that ground contact positions of the front wheels 18 are deviated from predetermined ground contact position, a case where it has been confirmed from the imaging data obtained by the second imaging unit 64 that a large bump or foreign object is present on the ground located below the vehicle body 2, and a case where it has been confirmed from the imaging data obtained by the third imaging unit 65 that a ridge present forward of the working vehicle 1 has reached a terminal end.

The display 61 is a device that displays an image taken by the imager 58, to be accurate, a moving image signal obtained by conversion in the controller 60, and is suitably provided in the vicinity of the operator's seat 10 of the cabin 3. The display 61 according to the first embodiment includes three monitors, specifically, a monitor A, a monitor B, and a monitor C, and imaging data obtained by the first imaging unit 63 is displayed on the monitor A, imaging data obtained by the second imaging unit 64 is displayed on the monitor B, and imaging data obtained by the third imaging unit 65 is displayed on the monitor C. Each of the monitors that constitute the display 61 may display imaging data only or may superimpose an auxiliary line, a scale mark, or the like on a screen of the imaging data in the controller 60. The display 61 according to the present invention may divide a screen of a single monitor into a plurality of screens and display an image in a predetermined portion of each of the divided screens. The display 61 according to the present invention need not be fixed to the operator's seat 10 of the cabin 3. A mobile terminal such as a smartphone or a tablet PC may be used as the display 61, and an image may be displayed in the vicinity of the operator's seat 10 or may be displayed at a place remote from the working vehicle 1 over a network.

The notifier 62 provides a notification by using sound such as voice, electronic sound, buzzer, or siren and/or light such as flash, a light bulb, or a diode upon receipt of a signal for notification from the controller 60.

For example, in a case where it has been confirmed from the imaging data obtained by the first imaging unit 63 that the ground contact positions of the front wheels 18 are deviated from predetermined ground contact positions, a notification may be provided by issuing voice such as "The travelling position is deviated." In a case where it has been confirmed from the imaging data obtained by the second imaging unit 64 that a large bump or foreign object is present on the ground located below the vehicle body 2, a notification may be provided by issuing voice such as "An obstacle is present on the ground. Stop travelling." or buzzer sound.

Although an example in which the first imaging units 63 (63L and 63R), the second imaging unit 64, and the third imaging unit 65 are provided has been illustrated in the above embodiment, the working vehicle 1 need just include at least one of the first imaging unit 63 (63L and 63R), the second imaging unit 64, and the third imaging unit 65, as long as an image of the region including the left front wheel 18L and/or the right front wheel 18R can be captured. Furthermore, the positions of the first imaging unit 63 (63L and 63R), the second imaging unit 64, and the third imaging unit 65 are not limited to those in the above embodiment.

The working vehicle 1 according to the first embodiment includes the vehicle body 2 to which the working device 49 is connectable, the traveling device 4 including the left front wheel 18L provided at the left front portion of the vehicle body 2 and the right front wheel 18R provided at the right front portion of the vehicle body 2, the drive device 5 that drives the traveling device 4, the tank 7 in which gas to drive the drive device 5 is stored, the hood 9 provided at the front portion of the vehicle body 2 such that the hood 9 is located between the left front wheel 18L and the right front wheel 18R, and the imager 50 provided on the vehicle body 2, and the tank 7 is housed in the hood 9, and the imager 50 is operable to capture an image of a region including the left front wheel 18L and/or the right front wheel 18R.

By thus imaging the region including the left front wheel 18L and/or the right front wheel 18R by the imager 50, it is possible to capture an image of the ground contact portions where the left front wheel 18L and the right front wheel 18R are in contact with the ground, and it is possible to operate the working vehicle 1 by using imaging data thus obtained. As a result, even in a case where expanding the hood 9 (the housing 62) outward in the width direction causes poor visibility, driving of the working vehicle 1 is not hindered, and therefore a space that can sufficiently accommodate the tanks 7 can be secured in the hood 9 (the housing 62).

In the working vehicle 1 according to the first embodiment, the imager 50 may image a region including a region between the left front wheel 18L and the hood 9 and may image a region including a region between the right front wheel 18R and the hood 9. By directing the imager 50 toward these regions, the ground contact portions of the left front wheel 18L and the right front wheel 18R (portions where the front tires 18 are in contact with the ground) can be included in imaging data with certainty, and imaging data that is optimum and advantageous for work performed on an agricultural field while steering the working vehicle 1 can be obtained.

In the working vehicle 1 according to the first embodiment, the hood 9 may include the housing 62 in which the tank 7 is housed, and the housing 62 may be wider than the vehicle body 2 in the vehicle body width direction and overhang the left front wheel 18L and/or the right front wheel 18R. By thus providing the housing 62 that is wider than the vehicle body 2 in the vehicle body width direction, the number of tanks 7 that can be stored in the hood 9 can be increased (the capacity of storing the tanks 7 can be improved).

The working vehicle 1 according to the first embodiment may include the cabin 3 in which the operator's seat 10 provided on the vehicle body 2 is housed, and the display 61 that is provided in the vicinity of the operator's seat 10 and displays an image taken by the imager 50. By thus providing the display 61 in the vicinity of the operator's seat 10, it is possible to operate the working vehicle 1 while viewing imaging data of the ground contact portions of the left front wheel 18L and the right front wheel 18R displayed on the display 61.

**In** the working vehicle 1 according to the first embodiment, the imager 50 may image a region including the vehicle body 2. By acquiring imaging data including the vehicle body 2, information such as the space between the vehicle body 2 and the ground (a distance along the up-down direction) can be obtained. As a result, whether or not irregular ground or an obstacle makes contact with the vehicle body 2, whether or not an obstacle makes contact with the first imaging unit 63, the second imaging unit 64, and the third imaging unit 65 provided at an almost same height, or the like can be monitored.

The working vehicle 1 according to the first embodiment may include the cabin 3 in which the operator's seat 10 provided on the vehicle body 2 is housed, the cabin 3 may be provided rearward of the hood 9, opposite outer end portion(s) of the hood 9 in the vehicle body width direction may lie on the straight line L1 that connects the operator's seat 10 and the left front wheel 18L and/or the straight line L1 that connects the operator's seat 10 and the right front wheel 18R, and the imager 50 may image a region located below the hood 9 and including the left front wheel 18L and/or the right front wheel 18R.

In a case where an outer end portion of the hood 9 in the vehicle body width direction is present on the line L1 connecting the operator's seat 10 and the left front wheel 18L or in a case where an outer end portion of the hood 9 in the vehicle body width direction is present on the line L1 connecting the operator's seat 10 and the right front wheel 18R, there is a possibility that an outer edge of the hood 9 in the vehicle body width direction hinders view from the operator's seat 10 to the left front wheel 18L or the right front wheel 18R, and it is therefore preferable to capture an image of the region located below the hood 9 and including the left front wheel 18L and/or the right front wheel 18R by providing the imager 50.

In the working vehicle 1 according to the first embodiment, the imager 50 may image a ground contact portion of the left front wheel 18L and/or the right front wheel 18R from a position higher than the axis of the left front wheel 18L and the right front wheel 18R. In a case where an image of the ground contact portion is captured in a looking-down manner (overlooking manner) from the imager 50 provided higher, not only imaging data of the ground contact portion, but also information such as the space between the vehicle body 2 and the ground (a distance along the up-down direction) can be obtained. As a result, whether or not irregular ground or an obstacle makes contact with the vehicle body 2, whether or not an obstacle makes contact with the first imaging unit 63, the second imaging unit 64, and the third imaging unit 65 provided at an almost same height, or the like can be monitored.

The working vehicle 1 according to the first embodiment may include the cabin 3 in which the operator's seat 10 provided on the vehicle body 2 is housed, the cabin 3 may be provided rearward of the hood 9, a plurality of the tanks 7 may be arranged in the up-down direction inside the hood 9, an upper end of the hood 9 may be located higher than the backrest portion of the operator's seat 10, and the imager 50 may include the first imager 63 to capture an image of a region located below the hood 9 and including the left front wheel 18L and/or the right front wheel 18R and a second imager (the third imaging unit 65) to capture an image of a region including an area forward of the hood 9.

In a case where the upper end of the hood 9 is located higher than the backrest portion of the operator's seat 10, it is difficult to check the ground contact portions of the front wheels 18 located downward due to the upper end of the hood 9. It is therefore preferable to capture an image of the ground contact portions of the front wheels 18 by providing the first imaging unit 63 in a case where the upper end of the hood 9 is located higher than the backrest portion of the operator's seat 10.

In a case where the second imaging unit (the third imaging unit 65) to capture an image of the region including an area forward of the hood 9 is provided, it is possible to capture an image of the ground to which the working vehicle 1 will travel. As a result, it is possible to recognize that the working vehicle 1 is about to reach a terminal end of a ridge and notify an operator of necessity of turn or recognize that a foreign object or the like is present on the traveling path and notify an operator of necessity of stopping the vehicle.

A plurality of tanks 7 may be arranged in the vehicle body width direction in the hood 9. By arranging the plurality of tanks 7 in the vehicle body width direction, the tank storing capacity of the hood 9 can be increased, and the working vehicle 1 can be operated while using plenty of fuel in the plurality of tanks 7 stored in the hood 9.

### [Second Embodiment]

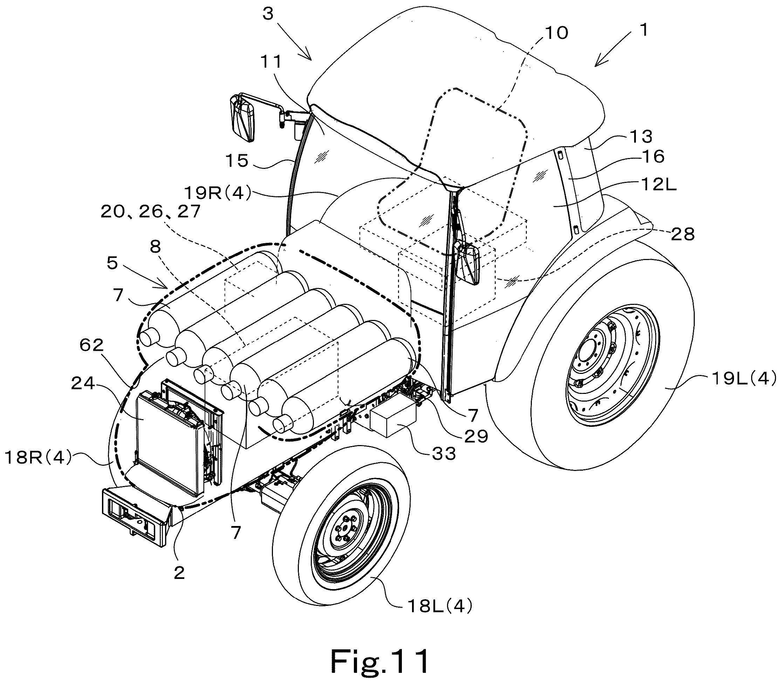

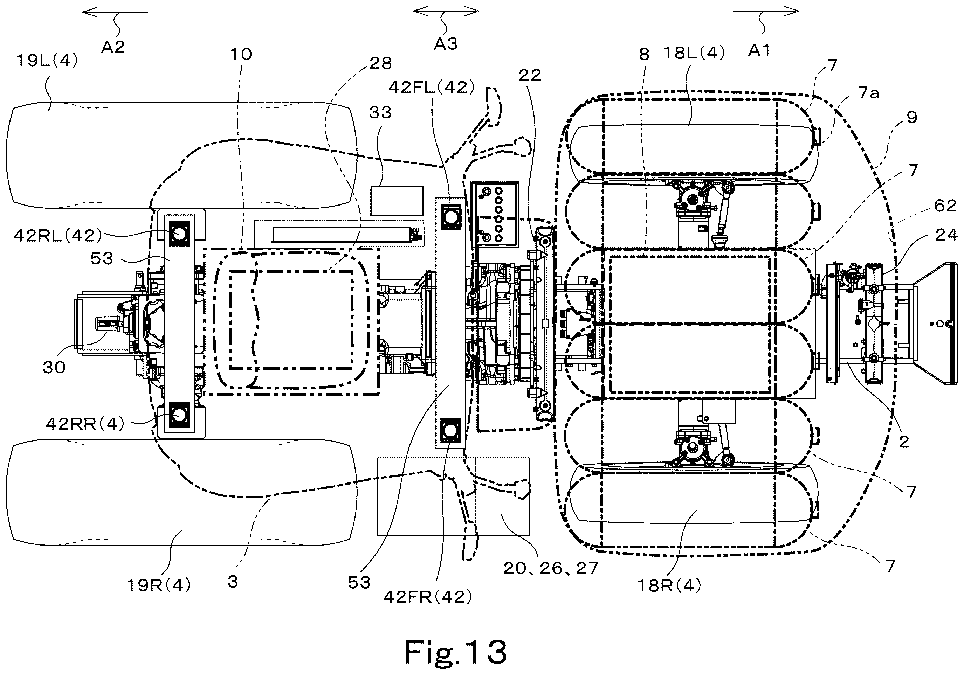

A working vehicle 1 according to the second embodiment is described with reference to FIGS. 11 to 15B.

The working vehicle 1 according to the first embodiment makes it possible to operate the working vehicle 1 by using imaging data acquired by the imager 50 even under a situation where forward view is poor, and produces an effect of further expanding the hood 9 and improving a capacity of storing the tanks 7 in the hood 9.

In contrast to the first embodiment, the working vehicle 1 according to the second embodiment has a feature in a storage structure, specifically, how a tank 7 is actually stored in a hood 9. In other words, the working vehicle 1 according to the second embodiment includes, forward of an operator's seat 10, the hood 9 to store the tank 7.

Specifically, the working vehicle 1 according to the second embodiment includes a vehicle body 2 to which a working device 49 is connectable, the operator's seat 10 provided on the vehicle body 2, a traveling device 4 that supports the vehicle body 2 and allows the vehicle body 2 to travel, a drive device 5 that drives the traveling device 4, a tank 7 in which gas to drive the drive device 5 is stored, and the hood 9 that is provided forward of the operator's seat 10 and in which the tank 7 is stored.

The members such as the vehicle body 2, the operator's seat 10, the traveling device 4, and the drive device 5 included in the working vehicle 1 according to the second embodiment are identical to those provided in the working vehicle 1 according to the first embodiment. Therefore, description of these members will be omitted in the following description.

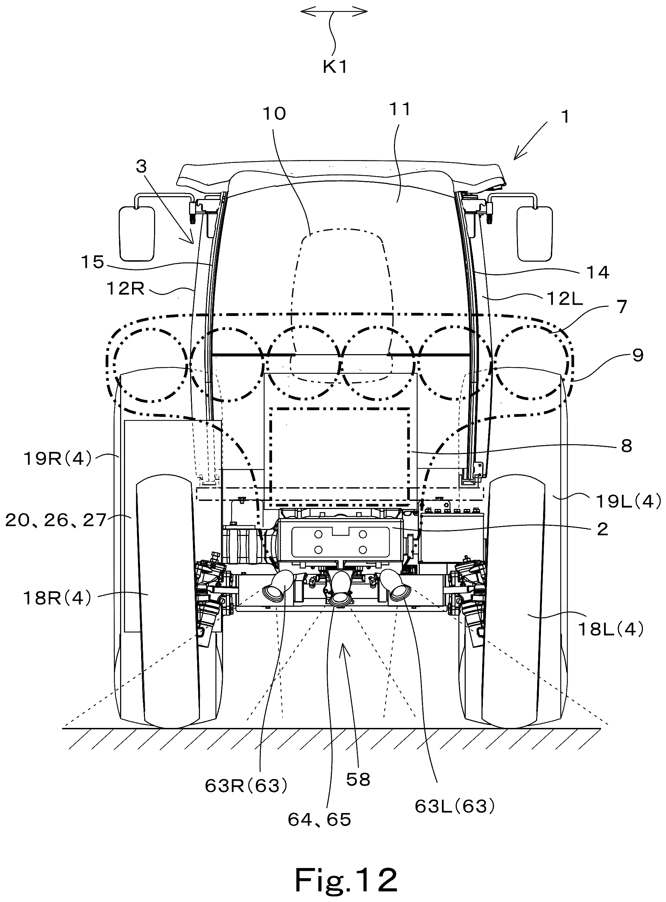

As illustrated in FIGS. 11 to 15B, especially FIG. 12, the hood 9 according to the second embodiment has a shape such that an upper portion thereof is wider than a lower portion thereof in a left-right direction in front view, and the upper portion has a higher storage capacity than the lower portion, as in the first embodiment.

Specifically, as clearly illustrated in the front view of FIG. 12, the lower portion of the hood 9 according to the second embodiment has a lateral width almost identical to a lateral width of the vehicle body 2. In the lower portion of the hood 9, a fuel cell stack 8 that has a lateral width almost identical to the lateral width of the vehicle body 2 is provided on the vehicle body 2. The upper portion of the hood 9 according to the second embodiment is wider outward in the width direction by an amount corresponding to lateral widths of two tanks 7 on both left and right sides. That is, the width of the hood 9 in the left-right direction changes at an intermediate portion in the up-down direction. A height at which the width in the left-right direction changes is almost identical to a height of upper ends of front tires 18.

In the upper portion of the hood 9 according to the second embodiment, a plurality of tanks 7 are arranged along the left-right direction, and six tanks 7 can be stored. In the hood 9 according to the second embodiment, the tanks 7 are not stacked in upper and lower stages (arranged in one stage).

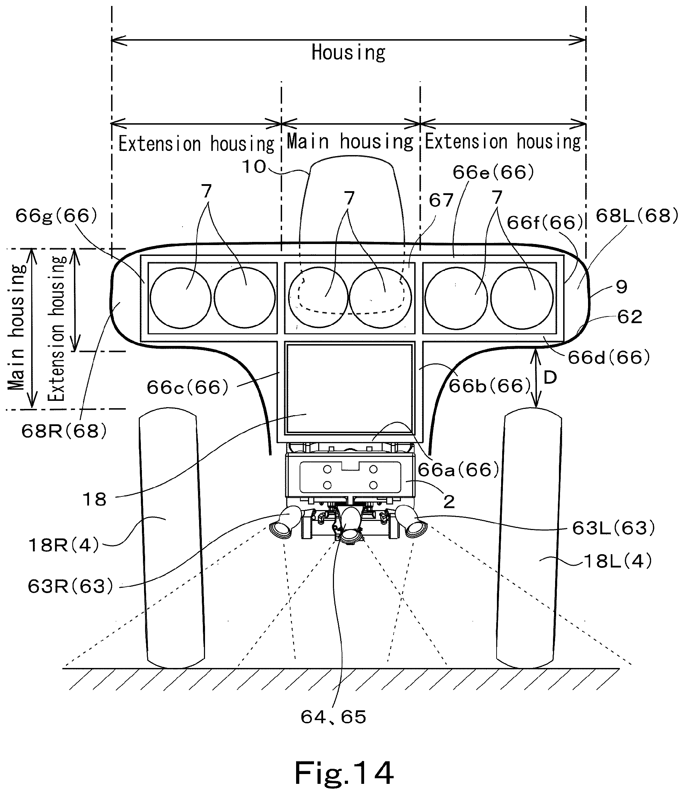

As illustrated in FIG. 14, the six tanks 7 are provided as a tank unit 31 inside the hood 9. The tank unit 31 according to the second embodiment includes a support frame 66 that can accommodate the plurality of tanks 7. The support frame 66 is a structure assembled in a scaffold shape (three-dimensional shape) by using metal bar members or the like, and supports the plurality of tanks 7.

Note that a positional relationship between the hood 9 and the front wheels 18, dimensions, and the like of the working vehicle 1 according to the second embodiment other than the above points are identical to those in the first embodiment.

The support frame 66 includes a first lateral frame member 66a that is provided on an upper surface of the vehicle body 2 so as to extend along the left-right direction, a left vertical frame member 66b that extends upward from a left end of the first lateral frame member 66a, a right vertical frame member 66c that extends upward from a right end of the first lateral frame member 66a, a second lateral frame member 66d that couples, in the left-right direction, an intermediate portion of the left vertical frame member 66b in the up-down direction and an intermediate portion of the right vertical frame member 66c in the up-down direction, and a third lateral frame member 66e that couples, in the left-right direction, an upper end of the left vertical frame member 66b and an upper end of the right vertical frame member 66c. A left end of the second lateral frame member 66d and a left end of the third lateral frame member 66e extend beyond the left vertical frame member 66b outward (leftward) in the width direction, and an outer left vertical frame member 66f that couples the second lateral frame member 66d and the third lateral frame member 66e in the up-down direction is provided between the left end of the second lateral frame member 66d and the left end of the third lateral frame member 66e. Furthermore, a right end of the second lateral frame member 66d and a right end of the third lateral frame member 66e extend beyond the right vertical frame member 66c outward (rightward) in the width direction, and an outer right vertical frame member 66g that couples the second lateral frame member 66d and the third lateral frame member 66e in the up-down direction is provided between the right end of the second lateral frame member 66d and the right end of the third lateral frame member 66e. Frame members 66a to 66g formed by combining the same metal bar members or the like are provided rearward of the frame members 66a to 66g described above, and front-rear frame members 66h that couple intersecting portions where the front frame members 66a to 66g intersect and intersecting portions where the rear frame members 66a to 66g intersect are provided at these intersecting portions. That is, the support frame 66 is formed in a three-dimensional grating shape (scaffold shape) by assembling the frame members 66a to 66h formed from metal bar members or the like so that the frame members 66a to 66h intersect three-dimensionally in the up-down direction, the left-right direction, and the front-rear direction.

The support frame 66 has, between the frame members, a gap through which the tanks 7 and the fuel cell stack 8 can be inserted, and can support a weight of the plurality of tanks 7. Specifically, two tanks 7 can be stored side by side in the left-right direction in a space located between the left vertical frame member 66b and the outer left vertical frame member 66f (between the left and right members) and between the second lateral frame member 66d and the third lateral frame member 66e (between the upper and lower members). Furthermore, two tanks 7 can be stored side by side in the left-right direction in a space located between the left vertical frame member 66b and the right vertical frame member 66c (between the left and right members) and between the second lateral frame member 66d and the third lateral frame member 66e (between the upper and lower members). Furthermore, two tanks 7 can be stored side by side in the left-right direction in a space located between the right vertical frame member 66c and the outer right vertical frame member 66g (between the left and right members) and between the second lateral frame member 66d and the third lateral frame member 66e (between the upper and lower members). The fuel cell stack 8 can be stored in a space located between the left vertical frame member 66b and the right vertical frame member 66c (between the left and right members) and between the first lateral frame member 66a and the second lateral frame member 66d (between the upper and lower members).

Use of the support frame 66 makes it possible to safely support the tanks 7 with certainty inside the hood 9 so that the tanks 7 are not damaged even upon application of vibration or shock.

Note that the working vehicle 1 according to the second embodiment also includes, inside the hood 9, a housing 62 in which the tanks 7 (the tanks 7 and the fuel cell stack 8) are stored, as in the first embodiment. In the second embodiment, the housing 62 is wider than the vehicle body 2 in the vehicle body width direction and overhangs the left front wheel 18L and/or the right front wheel 18R. By thus providing the housing 62 having an increased width in the vehicle body width direction, a large number of tanks 7 can be stored inside the hood 9.

As illustrated in FIG. 14, the housing 62 according to the second embodiment includes a main housing 67 provided above the vehicle body 2 and an extension housing 68 provided on one side and/or the other side in the vehicle body width direction. In the second embodiment, the extension housing 68 includes two extension housings, specifically, a left extension housing 68L provided leftward of the main housing 67 and a right extension housing 68R provided rightward of the main housing 67. However, in the housing 62 according to the present invention, the extension housing 68 may be provided only leftward or rightward of the main housing 67.

The main housing 67 is a space between the left vertical frame member 66b and the right vertical frame member 66c and is vertically long in the up-down direction. The second lateral frame member 66d is provided in an intermediate portion of the main housing 67 in the up-down direction, and two tanks 7 are stored side by side in the left-right direction in the main housing 67 above the second lateral frame member 66d. The fuel cell stack 8 is housed in the main housing 67 below the second lateral frame member 66d.

The left extension housing 68L is provided between the left vertical frame member 66b and the outer left vertical frame member 66f, and a dimension thereof along the up-down direction is slightly longer than a thickness (external diameter) of the tanks 7 along the up-down direction. The right extension housing 68R is provided between the right vertical frame member 66c and the outer right vertical frame member 66g, and a dimension thereof along the up-down direction is slightly longer than the thickness (external diameter) of the tanks 7 along the up-down direction. Two tanks 7 are stored side by side in the left-right direction in each of the left extension housing 68L and the right extension housing 68R. That is, four tanks 7 are stored in total in the left extension housing 68L and the right extension housing 68R.

The extension housings 68 (the left extension housing 68L and the right extension housing 68R) expand a housing volume of the housing 62 outward in the vehicle body width direction. In the present embodiment, an end portion of each of the extension housings 68 in the width direction is located outward of an outer side surface of the left front wheel 18L or the right front wheel 18R. In other words, each of the extension housings 68 protrudes outward beyond the left front wheel 18L or the right front wheel 18R. By providing the extension housings 68 and thereby expanding the housing volume of the housing 62 outward in the vehicle body width direction, the capacity of storing the tanks 7 can be improved markedly. It can also be said that the extension housings 68 are located above the left front wheel 18L and the right front wheel 18R and effectively use spaces above the upper ends of the left front wheel 18L and the right front wheel 18R, and thus improve the capacity of storing the tanks 7 in the housing 62 by storing some of the tanks 7 in these spaces.

Note that since the extension housings 68 effectively use the spaces above the left front wheel 18L and the right front wheel 18R, each of the extension housings 68 is provided at a same position as the left front wheel 18L or the right front wheel 18R on a plane. That is, in the working vehicle 1 according to the second embodiment, the extension housings 68 included in the housing 62 overlap the left front wheel 18L and/or the right front wheel 18R in plan view.

**It** can also be said that the working vehicle 1 according to the second embodiment uses, for storage of the tanks 7, a space above the fuel cell stack 8 that is included in the housing 62 provided inside the hood 9. That is, the tanks 7 in the main housing 67 are provided above the fuel cell stack 8, and the space above the fuel cell stack 8 is used for storage of the tanks 7.

A lower end of each of the extension housings 68 is located lower than an upper end of the housing 62 and is located higher than the upper end of the left front wheel 18L or the upper end of the right front wheel 18R. As illustrated in FIG. 14, the lower end of each of the extension housings 68 is located so that a distance D between the lower end of the extension housing 68 and the upper end of the left front wheel 18L or the upper end of the right front wheel 18R is 1/10 to 1/3 of the external diameter of the left front wheel 18L or the right front wheel 18R.

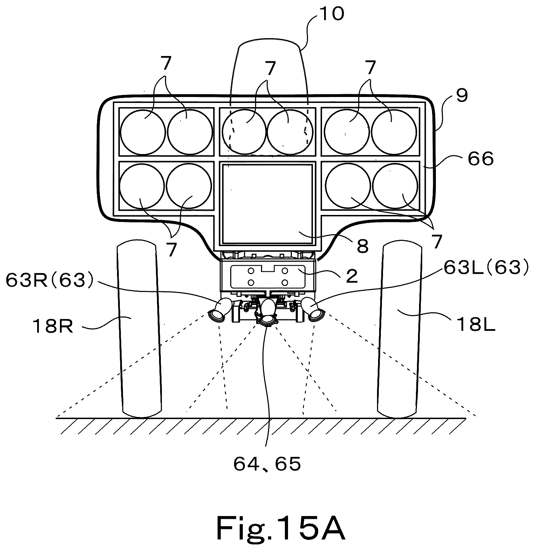

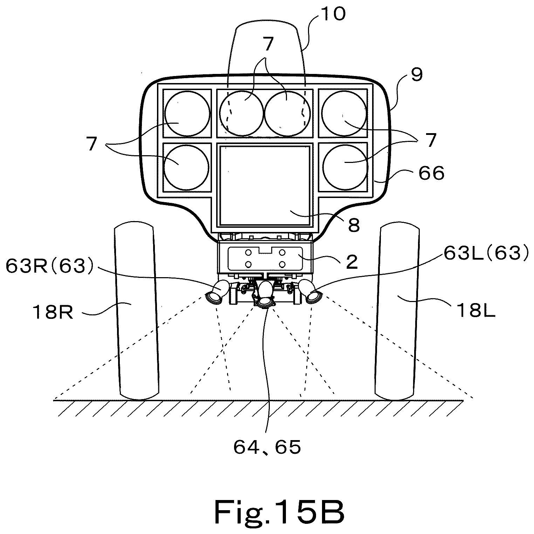

Note that in a case where the distance D is 1/10 to 1/3 of the external diameter of the left front wheel 18L or the right front wheel 18R, the tanks 7 may be stacked in upper and lower two stages, as illustrated in FIGS. 15A and 15B. In a case where the tanks 7 are stacked in upper and lower two stages, the lateral width of the hood 9 in the left-right direction can be made smaller than that in the second embodiment even though the number of stored tanks 7 is the same as that in the second embodiment, as illustrated in FIG. 15A. It is also possible to further increase the number of stored tanks 7, as illustrated in FIG. 15B.

As illustrated in FIG. 14, the working vehicle 1 according to the second embodiment preferably includes, on the vehicle body 2, an imager 50 to capture an image of a region including the left front wheel 18L and/or the right front wheel 18R, as in the first embodiment. In a case where the imager 50 is provided on the vehicle body 2, the working vehicle 1 according to the second embodiment preferably includes, in the vicinity of the operator's seat, a display 61 that displays an image (imaging data) taken by the imager 50. With the working vehicle 1 according to the second embodiment, the lateral width of the hood 9 along the left-right direction is wide due to the extension housings 68, and there is a possibility that forward view and downward view are hidden by the hood 9. Therefore, also in the working vehicle 1 according to the second embodiment, it is desirable to provide the imager 50 and the display 61 so that an operator can check the forward view and downward view as imaging data.

The working vehicle 1 according to the second embodiment includes the vehicle body 2 to which the working device 49 is connectable, the operator's seat 10 provided on the vehicle body 2, the traveling device 4 that supports the vehicle body 2 and allows the vehicle body 2 to travel, the drive device 5 that drives the traveling device 4, the tank 7 in which gas to drive the drive device 5 is stored, and the hood 9 that is provided forward of the operator's seat 10 and in which the tank 7 is housed.

With the working vehicle 1, a sufficient number of tanks 7 that require a storage space can be stored in the hood 9, and the drive device 5 can be driven with sufficient margin by using plenty of gas.

In the working vehicle 1 according to the second embodiment, the hood 9 includes the housing 62 in which the tank 7 is housed, and the housing 62 is wider than the vehicle body 2 in the width direction of the vehicle body 2. By thus providing, in the hood 9, the housing 62 wider in the width direction than the vehicle body 2, the storage capacity of the housing 62 is increased corresponding to the outward expansion in the width direction, and therefore a sufficient number of tanks 7 can be stored in the hood 9.

In the working vehicle 1 according to the second embodiment, the traveling device 4 includes the left front wheel 18L provided at a left front portion of the vehicle body 2 and the right front wheel 18R provided at a right front portion of the vehicle body 2, and the housing 62 overlaps the left front wheel 18L and/or the right front wheel 18R in plan view. By thus providing the housing 62 so that the housing 62 overlaps the left front wheel 18L and/or the right front wheel 18R in plan view, the "space above the left front wheel 18L and/or the right front wheel 18R", which is not conventionally used, can be effectively used, and the capacity of storing the tanks 7 in the hood 9 can be increased.

In the working vehicle 1 according to the second embodiment, the tanks 7 are located higher than the upper end of the left front wheel 18L and the upper end of the right front wheel 18R. By thus locating the tanks 7 higher than the upper end of the left front wheel 18L and the upper end of the right front wheel 18R, the "space above the left front wheel 18L and/or the right front wheel 18R", which is not conventionally used, can be effectively used, and the capacity of storing the tanks 7 in the hood 9 can be increased.

In the working vehicle 1 according to the second embodiment, the drive device 5 includes the fuel cell stack 8 that generates electric power by using the gas in the tanks 7, a battery 20 that accumulates electric power generated by the fuel cell stack 8, and a drive motor 6 that is driven by electric power generated by the fuel cell stack 8. By selecting a fuel cell vehicle that is driven by electric power generated by the fuel cell stack 8 as the working vehicle 1, a problem as to where to store the tanks 7, which exists in a fuel cell working vehicle 1, can be solved, and convenience of the fuel cell working vehicle 1 can be increased.

In the working vehicle 1 according to the second embodiment, the fuel cell stack 8 may be stored in the hood 9, and the tanks 7 may be provided above the fuel cell stack 8. By thus arranging the fuel cell stack 8 and the tanks 7 in the up-down direction, the fuel cell stack 8 and the tanks 7, which require a storage space the most, can be stored in the hood 9.

In the working vehicle 1 according to the second embodiment, the housing 62 may include, on one side and/or the other side in the vehicle body width direction, the extension housing 68 that expands the storage volume of the housing 62 outward in the vehicle body width direction, and the extension housing 68 may be provided higher than the upper end of the left front wheel 18L or the right front wheel 18R and store at least one of the tanks 7. By thus providing the extension housing 68, the storage capacity of the housing 62 is increased corresponding to the volume of the extension housing 68, and therefore a sufficient number of tanks 7 can be stored in the hood 9.

In the working vehicle 1 according to the second embodiment, the lower end of the extension housing 68 is preferably located lower than the upper end of the housing 62 and located higher than the upper end of the left front wheel 18L or the upper end of the right front wheel 18R. By setting an installation height and a size of the extension housing 68 so that the lower end of the extension housing 68 is located between the upper end of the housing 62 and the upper end of the left front wheel 18L or the upper end of the right front wheel 18R in the up-down direction, the extension housing 68 can be provided at a position that does not hinder turning and rolling of the left front wheel 18L and the right front wheel 18R.

In the working vehicle 1 according to the second embodiment, the imager 50 to capture an image of the region including the left front wheel 18L and/or the right front wheel 18R is preferably provided on the vehicle body 2, as in the first embodiment. Furthermore, the working vehicle 1 according to the second embodiment preferably includes a cabin 3 in which the operator's seat 10 provided on the vehicle body 2 is housed and the display 61 that is provided in the vicinity of the operator's seat 10 and displays an image (imaging data) taken by the imager 50. In the working vehicle 1 according to the second embodiment, a large number of tanks 7 and the fuel cell stack 8 are stored in the hood 9, and therefore there is a possibility that the hood 9 has an enlarged external shape. That is, also in the working vehicle 1 according to the second embodiment, there is a possibility that the hood 9 having an enlarged external shape impairs downward view and forward view. Therefore, the downward view and forward view are secured by the imager 50 and the display 61. This makes it possible to assist operator's driving and work.

Example embodiments of the present invention provide working vehicles 1 described in the following items.

(Item 1) A working vehicle 1 including a vehicle body 2 to which a working device 49 is connectable; a traveling device 4 including a left front wheel 18L provided at a left front portion of the vehicle body 2 and a right front wheel 18R provided at a right front portion of the vehicle body 2; a drive device 5 to drive the traveling device 4; a tank 7 to store gas to drive the drive device 5; a hood 9 provided at a front portion of the vehicle body 2 such that the hood 9 is located between the left front wheel 18L and the right front wheel 18R; and an imager 50 provided on the vehicle body 2, wherein the tank 7 is housed in the hood 9, and the imager 50 is operable to capture an image of a region including the left front wheel 18L and/or the right front wheel 18R.

With the working vehicle 1 according to item 1, by thus capturing an image of the region including the left front wheel 18L and/or the right front wheel 18R with the imager 50, it is possible to capture an image of the ground contact portions where the left front wheel 18L and the right front wheel 18R are in contact with the ground, and it is possible to operate the working vehicle 1 by using imaging data thus obtained. As a result, even in a case where expanding the hood 9 (the housing 62) outward in the width direction causes poor visibility, driving of the working vehicle 1 is not hindered, and therefore a space that can sufficiently accommodate the tank(s) 7 can be secured in the hood 9 (the housing 62).

(Item 2) The working vehicle 1 according to item 1, wherein the imager 50 is operable to capture an image of a region including an area between the left front wheel 18L and the hood 9.

With the working vehicle 1 according to item 2, by directing the imager 50 toward the region including the area between the left front wheel 18L and the hood 9, the ground contact portion of the left front wheel 18L (the portion where the front tire 18 is in contact with the ground) can be included in imaging data with certainty, and imaging data that is optimum and advantageous for work performed on an agricultural field while steering the working vehicle 1 can be obtained.

(Item 3) The working vehicle 1 according to item 1, wherein the imager 50 is operable to capture an image of a region including an area between the right front wheel 18R and the hood 9.

With the working vehicle 1 according to item 3, by directing the imager 50 toward the region including the area between the right front wheel 18R and the hood 9, the ground contact portions of the left front wheel 18L and/or the right front wheel 18R (the portion where the front tire(s) 18 is in contact with the ground) can be included in imaging data with certainty, and imaging data that is optimum and advantageous for work performed on an agricultural field while steering the working vehicle 1 can be obtained.

(Item 4) The working vehicle 1 according to any one of items 1 to 3, wherein the hood 9 includes a housing 62 to house the tank 7, and the housing 62 is wider than the vehicle body 2 in the vehicle body width direction and overhangs the left front wheel 18L and/or the right front wheel 18R.

With the working vehicle 1 according to item 4, the housing 62 wider than the vehicle body 2 in the vehicle body width direction is provided, and therefore the number of tanks 7 stored in the hood 9 can be increased (the capacity of storing the tanks 7 can be improved).

(Item 5) The working vehicle 1 according to any one of items 1 to 4, further including a cabin 3 to house an operator's seat 10 provided on the vehicle body 2; and a display 61 to display an image captured by the imager 50, the display 61 being provided in the vicinity of the operator's seat 10.

With the working vehicle 1 according to item 5, the display 61 is provided in the vicinity of the operator's seat 10, and therefore it is possible to operate the working vehicle 1 while visually checking imaging data of the ground contact portions of the left front wheel 18L and the right front wheel 18R displayed on the display 61.

(Item 6) The working vehicle 1 according to any one of items 1 to 5, wherein the imager 50 is operable to capture an image of a region including the vehicle body 2.

With the working vehicle 1 according to item 6, by acquiring imaging data including the vehicle body 2, information such as the space between the vehicle body 2 and the ground (a distance along the up-down direction) can be obtained. As a result, whether or not irregular ground or an obstacle makes contact with the vehicle body 2, whether or not an obstacle makes contact with the first imaging unit 63, the second imaging unit 64, and the third imaging unit 65 provided at an almost same height, or the like can be monitored.

(Item 7) The working vehicle 1 according to item 1, further including a cabin 3 to house an operator's seat 10 provided on the vehicle body 2, wherein the cabin 3 is provided rearward of the hood 9, one of or both of opposite outer end portions of the hood 9 in a vehicle body width direction lies on or lie on a straight line that connects the operator's seat 10 and the left front wheel 18L and/or a straight line that connects the operator's seat 10 and the right front wheel 18R, and the imager 50 is operable to capture an image of a region located below the hood 9 and including the left front wheel 18L and/or the right front wheel 18R.

With the working vehicle 1 according to item 7, an image of the region located below the hood 9 and including the left front wheel 18L and/or the right front wheel 18R can be captured by providing the imager 50, and therefore even in a case where an outer end portion of the hood 9 in the vehicle body width direction is present on the line L1 that connects the operator's seat 10 and the left front wheel 18L or even in a case where an outer end portion of the hood 9 in the vehicle body width direction is present on the line L1 that connects the operator's seat 10 and the right front wheel 18R, an outer edge of the hood 9 in the vehicle body width direction is less likely to hinder view from the operator's seat 10 to the left front wheel 18L and the right front wheel 18R.

(Item 8) The working vehicle 1 according to item 7, wherein the imager 50 is operable to capture an image of a ground contact portion of the left front wheel 18L and/or the right front wheel 18R from a position higher than axes of the left front wheel 18L and the right front wheel 18R.

With the working vehicle 1 according to item 8, an image of the ground contact portion can be captured in a looking-down manner (overlooking manner) from the imager 50 provided higher, and therefore not only imaging data of the ground contact portion, but also information such as the space between the vehicle body 2 and the ground (a distance along the up-down direction) can be obtained. As a result, whether or not irregular ground or an obstacle makes contact with the vehicle body 2, whether or not an obstacle makes contact with the first imaging unit 63, the second imaging unit 64, and the third imaging unit 65 provided at an almost same height, or the like can be monitored.

(Item 9) The working vehicle 1 according to item 1, further including a cabin 3 to house an operator's seat 10 provided on the vehicle body 2, wherein the cabin 3 is provided rearward of the hood 9, a plurality of the tanks 7 are arranged in an up-down direction inside the hood 9, an upper end of the hood 9 is located higher than a backrest portion of the operator's seat 10, and the imager 50 includes a first imager to capture an image of a region located below the hood 9 and including the left front wheel 18L and/or the right front wheel 18R and a second imager to capture an image of a region including an area forward of the hood 9.

With the working vehicle 1 according to item 9, the first imager that captures an image of the region located below the hood 9 and including the left front wheel 18L and/or the right front wheel 18R is provided, and therefore even in a case where the upper end of the hood 9 is located higher than the backrest portion of the operator's seat 10, the upper end of the hood 9 does not cause hindrance in checking of the ground contact portions of the front wheels 18. Furthermore, since the second imaging unit (the third imaging unit 65) that captures an image of the region including an area forward of the hood 9 is provided, it is possible to capture an image of the ground to which the working vehicle 1 will travel. As a result, it is possible to recognize that the working vehicle 1 is about to reach a terminal end of a ridge and notify an operator of necessity of turn or recognize that a foreign object or the like is present on the traveling path and notify an operator of necessity of stopping the vehicle.

(Item 10) The working vehicle 1 according to any one of items 1 to 9, wherein a plurality of the tanks 7 are arranged in a vehicle body width direction in the hood 9.

With the working vehicle 1 according to item 10, in a case where a plurality of tanks 7 are arranged in the vehicle body width direction, the tank storing capacity of the hood 9 can be increased, and it is possible to operate the working vehicle 1 by using plenty of fuel in the plurality of tanks 7 stored in the hood 9.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: traveling vehicle

- 2: vehicle body
- 3: cabin
- 4: traveling device
- 5: drive device
- 6: drive motor
- 7: tank (hydrogen tank)
- 9: hood
- 10: operator's seat
- 18L: left front wheel
- 18R: right front wheel
- 49: working device
- 50: imager
- 62: housing

## Claims

1. A working vehicle comprising:
a vehicle body to which a working device is connectable;
a traveling device including a left front wheel provided at a left front portion of the vehicle body and a right front wheel provided at a right front portion of the vehicle body;
a drive device to drive the traveling device;
a tank to store gas to drive the drive device;
a hood provided at a front portion of the vehicle body such that the hood is located between the left front wheel and the right front wheel; and
an imager provided on the vehicle body; wherein
the tank is housed in the hood; and
the imager is operable to capture an image of a region including the left front wheel and/or the right front wheel.

2. The working vehicle according to claim 1, wherein
the imager is operable to capture an image of a region including an area between the left front wheel and the hood.

3. The working vehicle according to claim 1, wherein
the imager is operable to capture an image of a region including an area between the right front wheel and the hood.

4. The working vehicle according to any one of claims 1 to 3, wherein
the hood includes a housing to house the tank; and
the housing is wider than the vehicle body in a vehicle body width direction and overhangs the left front wheel and/or the right front wheel.

5. The working vehicle according to any one of claims 1 to 3, further comprising:
a cabin to house an operator's seat provided on the vehicle body; and
a display to display an image captured by the imager, the display being provided in the vicinity of the operator's seat.

6. The working vehicle according to any one of claims 1 to 3, wherein
the imager is operable to capture an image of a region including the vehicle body.

7. The working vehicle according to claim 1, further comprising a cabin to house an operator's seat provided on the vehicle body; wherein
the cabin is provided rearward of the hood;
one of or both of opposite end portions of the hood in a vehicle body width direction lies on or lie on a straight line that connects the operator's seat and the left front wheel and/or a straight line that connects the operator's seat and the right front wheel; and
the imager is operable to capture an image of a region located below the hood and including the left front wheel and/or the right front wheel.

8. The working vehicle according to claim 7, wherein
the imager is operable to capture an image of a ground contact portion of the left front wheel and/or the right front wheel from a position higher than axes of the left front wheel and the right front wheel.

9. The working vehicle according to claim 1, further comprising a cabin to house an operator's seat provided on the vehicle body; wherein
the cabin is provided rearward of the hood;
a plurality of the tanks are arranged in an up-down direction inside the hood;
an upper end of the hood is located higher than a backrest portion of the operator's seat; and
the imager includes:
a first imager to capture an image of a region located below the hood and including the left front wheel and/or the right front wheel; and
a second imager to capture an image of a region including an area forward of the hood.

10. The working vehicle according to claim 1, wherein
a plurality of the tanks are arranged in a vehicle body width direction in the hood.
